# EUROPÄISCHE PATENTSCHRIFT

(11) **EP 2 315 626 B1**
(45) Veröffentlichungstag und Bekanntmachung des Hinweises auf die Patenterteilung: **22.02.2012**
(21) Anmeldenummer: 09781815.7
(22) Anmeldetag: 13.08.2009
(51) Int. Cl.: B01D 71/06, B01D 71/70, B01D 69/02, B01D 69/12

(54) **PORÖSE MEMBRANEN AUS ORGANOPOLYSILOXAN COPOLYMEREN**
POROUS MEMBRANES MADE UP OF ORGANOPOLYSILOXANE COPOLYMERS
MEMBRANES POREUSES COMPOSÉES DE COPOLYMÈRES ORGANOPOLYSILOXANE

(30) Priorität: 22.08.2008 DE 102008041477
(43) Veröffentlichungstag der Anmeldung: 04.05.2011
(73) Patentinhaber: Wacker Chemie AG, 81737 München (DE)
(72) Erfinder: HÖLZL, Manfred, 84489 Burghausen (DE); KIRSCHBAUM, Frauke, 80995 München (DE)
(74) Vertreter: Fritz, Helmut
(86) Internationale Anmeldenummer: PCT/EP2009/060511
(87) Internationale Veröffentlichungsnummer: WO 2010/020584

(56) Entgegenhaltungen:
- DE-A- 10 326 575

## Beschreibung

Die Erfindung betrifft poröse Membranen aus Organopolysiloxan-Copolymeren und deren Herstellung sowie deren Anwendung für die Trennung von Stoffgemischen.

Die Trennung von Stoffgemischen mit Hilfe von Membranen ist bereits seit langer Zeit bekannt. Die Trennung von Gemischen erfolgt mit Membranen meists energieeffizienter als mit herkömmlichen Trennmethoden, wie z.B. fraktionierte Destillation oder chemische Adsorption. Die Suche nach neuen Membranen mit einer längeren Lebensdauer, verbesserten Selektivitäten, besseren mechanischen Eigenschaften, einer höheren Durchflussrate und geringen Kosten sind dabei vielbeachtete Aspekte der aktuellen Membranforschung.

Asymmetrisch aufgebaute poröse Membranen für die Trennung von unterschiedlichsten Stoffgemischen sind in der Literatur bekannt. So beschreibt US3133137, US3133132 und US4744807 die Herstellung und die Verwendung von asymmetrisch aufgebauten Celluloseacetatmembranen, die nach dem Phaseninversionsprozess hergestellt werden. Der Prozess wird ebenfalls als Loeb-Sourirajan-Prozess bezeichnet. So gefertigte Membranen weisen einen porösen Unterbau und eine selektive Schicht auf. Die dünne Deckschicht ist für die Trennleistung verantwortlich, während der poröse Unterbau zu einer mechanischen Stabilität der Membranen führt. Diese Art der Membranen findet in Anlagen zur Reversen Osmose für die Trinkwasser- bzw. Reinstwassergewinnung aus Meer- oder Brackwasser Verwendung. Weitere Membranen mit diesem porösen asymmetrischen Aufbau sind ebenfalls bekannt. So werden in den Schriften US3615024, DE3936997, US5290448 sowie DE2318346 Membranen aus Polysulfon, Polyetherketonen, Polyacrylnitril und Polyimid beschrieben.

Je nach Herstellungsart werden sehr poröse oder kompaktere Membranen erhalten. Typische Anwendungen der Membranen sind dabei Reverse Osmose, Ultrafiltration, Nanofiltration, Mikrofiltration, Pervaporation und die Trennung von Gasen. Durch die eingesetzten Polymere sind die Polymere teilweise hydrophil. Dies hat zu Folge, dass sich organische Lösungen aufgrund der schlechten Benetzung kaum auftrennen lassen.

Die Verwendung von Siliconen als Membranmaterial ist ebenfalls Stand der Technik. Silicone sind gummiartige Polymere mit einem niedrigen Glaspunkt (Tg < -50 °C) und einem hohen Anteil an freiem Volumen im Polymergefüge. In GB1536432 und US5733663 wird die Herstellung von Membranen auf der Basis von Siliconen beschrieben. Beschriebene Anwendungen beinhalten sowohl Pervaporation als auch die Trennung von Gasen.

Sehr dünne Siliconmembranen, die eigentlich für eine optimale Membranperformance notwendig wären, sind aufgrund der ungenügenden mechanischen Eigenschaften nicht handhabbar. Um die notwendige mechanische Stabilität der Silicone zu erhalten, handelt es sich bei den beschriebenen Membranen immer um Verbundsysteme mit einem teilweise sehr komplizierten und aufwändigen, mehrschichtigen Aufbau. Dabei wird die trennselektive Siliconschicht immer durch Methoden, wie z.B. Sprühen oder Lösungsauftrag, auf ein poröses Trägersubstrat aufgebracht. Die Vernetzung erfolgt meistens durch einen weiteren Schritt, z.B. durch Nachvernetzung mit elektromagnetischen Strahlen oder durch die Zugabe von Katalysatoren.

Eine weitere Anwendung von Siliconen besteht im Verschließen von Fehlstellen bei Membranen, die für die Trennung von Gasen eingesetzt werden. Die in US4484935 beschriebenen Membranen auf der Basis von Polysulfon werden durch eine zusätzliche Schicht aus Silicon versiegelt, um kleine Fehlstellen zu verschließen. Die dort beschriebene dichte und kompakte Siliconschicht wird durch thermische Behandlung vernetzt.

Auch die Verwendung von Organopolysiloxan Copolymeren als Membranen ist Stand der Technik. Z.B. wird in US2004/254325 und DE10326575 die Herstellung und Verwendung von thermoplastisch verarbeitbaren Organopolysiloxan/Polyharnstoff Copolymeren beansprucht. Für welche Membrananwendungen die beanspruchten Silicone verwendet werden können, wird dort nicht beschrieben. Die Herstellung von porösen Membranen ist ebenfalls nicht beschrieben. Auch der Einsatz als Membran für die Trennung von gas-flüssig, gas-fest, flüssig-flüssig, fest-flüssg, fest-fest-Gemischen wird in der Patentschrift nicht erwähnt.

Daneben werden in JP6277438 auch Silicon-Polyimid-Copoylmer als Material für die Herstellung von kompakten Membranen beansprucht. Die dort aufgeführten Anwendungen zielen auf die Trennung von Gasen.

In der Literatur sind ebenfalls poröse Membranen aus Silicon-Carbonat- (JP55225703) sowie aus Silicon-Polyimid-Copolymeren (JP2008/86903) bekannt. Bei beiden Copolymeren sind allerdings die mechanische Festigkeit und die Selektivität für einen technischen Einsatz nicht ausreichend. Weiterhin sind bei beiden Copolymeren kaum physikalische Wechselwirkungen vorhanden, was die thermische Stabilität der porösen Membranstruktur stark herabsetzt. Darüber hinaus sind die beschriebenen Silicon-Copolymere sehr spröde, was die Herstellung von typischen Membran-Wickelmodulen deutlich erschwert.

Weiterhin ist bekannt, dass bei Silicon-Carbonat-Copolymeren der Carbonat-Anteil im Copolymer hoch sein muss, um brauchbare Filmbildungseigenschaften zu erzielen. Daher werden die günstigen Silicon-Durchlässigkeiten durch das deutlich undurchlässigere Polycarbonat stark verschlechtert. Silicon-Imid-Copolymere zeichnen sich bei der Synthese dadurch aus, dass der Imidisierungsschritt bei Temperaturen, die deutlich über 250 °C liegen, durchgeführt werden muss, was technisch aufwändig ist und die hergestellten Copolymere teuer macht. Darüber hinaus sind Polyimide deutlich schlechter löslich, was für die Herstellung poröser Membranen ungünstig ist.

Dies schränkt den Einsatz beider Systeme stark ein. Darüber hinaus ist die Herstellung für beide Copolymere sehr aufwändig, was für eine technische Umsetzung ungünstig ist.

Grundsätzlich sind nur solche Polymere für die Herstellung von porösen Membranen geeignet, die über eine ausreichende mechanische Festigkeit und genügende Flexibilität verfügen. Darüber hinaus müssen die Polymere, falls die Herstellung mit Hilfe des Phaseninversionsprozesses durchgeführt wird, in einem passenden, mit dem Medium des Inversionsbades mischbaren Lösemittel löslich sein. Übliche Polymere, die sich so verarbeiten lassen, sind dabei Cellulose Acetat, Polysulfone, Polyvinylidenfluoride, Polyetherimide und aromatische Polyamide.

Normale Silicone sind aufgrund ihrer Eigenschaften nicht mit Hilfe des Phasen-Inversions-Verfahren verarbeitbar. Siliconmembranen werden in sämtlichen beschriebenen Verfahren durch einen mehrstufigen, aufwändigen und teueren Prozess hergestellt. Daneben ist die Herstellung sehr dünner, kompakter Trennschichten auf der Basis von Siliconen technisch nur sehr schwierig zu realisieren. Die Herstellung von porösen trennselektiven Siliconschichten ist mit denen in der Literatur beschriebenen Methoden nicht möglich.

Von McGrath et al. in Advances in Polymer Science, 1988, Vol. 86, S. 1-70 werden eine Reihe von unterschiedlichen Organopolysiloxan/Polyharnstoff/Polyurethan/Polyamid/Polyoxalyl diamin Copolymeren beschrieben.

Weiterhin wird von Sava et al. in Revue Roumaine de Chimie, 2007, Vol. 52, S. 127-133 die Herstellung von Silicon-Polyamid-Copolymeren beschrieben.

Es bestand die Aufgabe Membranen herzustellen, die die positiven Eigenschaften der Membranen aus Silicon-Copolymeren aufweisen, aber nicht mehr deren genannte Nachteile.

Gegenstand der Erfindung sind poröse Membranen (M) enthaltend Organopolysiloxan/Polyharnstoff/Polyurethan/Polyamid/Polyoxalyldiamin Copolymere der allgemeinen Formel (1): 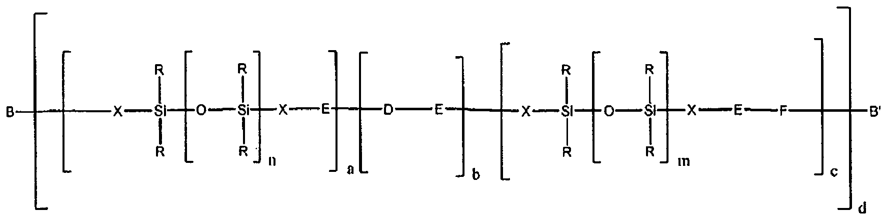 wobei das Strukturelement **E** ausgewählt wird aus den allgemeinen Formeln (2a - f) 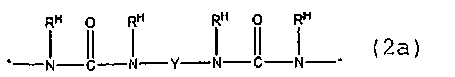 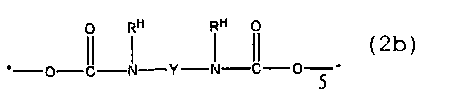 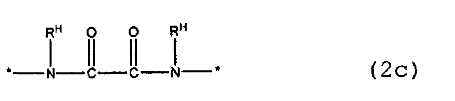 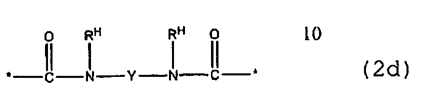 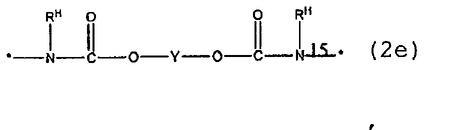 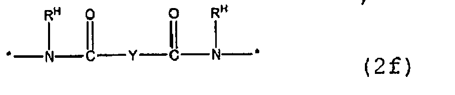 wobei das Strukturelement **F** ausgewählt wird aus den allgemeinen Formeln (3a -f) 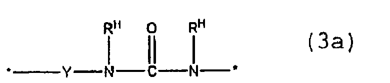 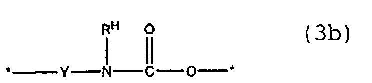 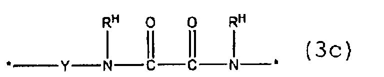 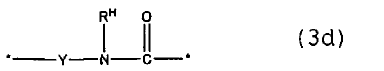 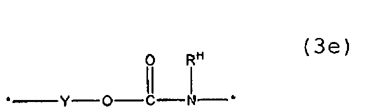 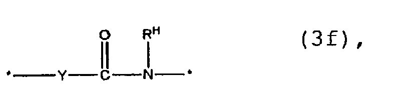 wobei
- R: einen ,einwertigen, gegebenenfalls durch Fluor oder Chlor substituierten Kohlenwasserstoffrest mit 1 bis 20 Kohlenstoffatomen,
- **R^{H}**: Wasserstoff, einen einwertigen, gegebenenfalls durch Fluor oder Chlor substituierten Kohlenwasserstoffrest mit 1 bis 22 Kohlenstoffatomen,
- **X**: einen Alkylen-Rest mit 1 bis 20 Kohlenstoffatomen, in dem einander nicht benachbarte Methyleneinheiten durch Gruppen -O- ersetzt sein können, oder einen Arylenrest mit 6 bis 22 Kohlenstoffatomen,
- **Y**: einen zweiwertigen, gegebenenfalls durch Fluor oder Chlor substituierten Kohlenwasserstoffrest mit 1 bis 20 Kohlenstoffatomen,
- **D**: einen gegebenenfalls durch Fluor, Chlor, C₁-C₆-Alkyl- oder C₁-C₆-Alkylester substituierten Alkylenrest mit 1 bis 700 Kohlenstoffatomen, in dem einander nicht benachbarte Methyleneinheiten durch Gruppen -O-, -COO-, -OCO-, oder -OCOO-, ersetzt sein können, oder Arylenrest mit 6 bis 22 Kohlenstoffatomen,
- **B, B'**: eine reaktive oder nicht reaktive Endgruppe, welche kovalent an das Polymer gebunden ist,
- **m**: eine ganze Zahl von 1 bis 4000,
- **n**: eine ganze Zahl von 1 bis 4000,
- **a**: eine ganze Zahl von mindestens 1,
- **b**: eine ganze Zahl von 0 bis 40,
- **c**: eine ganze Zahl von 0 bis 30 und
- **d**: eine ganze Zahl größer 0 bedeuten,

mit der Massgabe, dass mindestens 10% der Reste **R^{H}** Wasserstoff bedeuten.

Der Erfindung liegt die Entdeckung zugrunde, dass sich die Organopolysiloxan/Polyharnstoff/Polyurethan/Polyamid/Polyoxalyl diamin Copolymere zur Herstellung von Membranen (M), insbesondere zur Herstellung von asymmetrisch aufgebauten Membranen (M) eignen, die eine wesentlich bessere mechanische Stabilität und ein wesentlich besseres Permeationsverhalten aufweisen als die entsprechenden nicht porösen Membranen, die in der Literatur aufgeführt werden.

Durch die Verarbeitung der Organopolysiloxan/Polyharnstoff/- Polyurethan/Polyamid/Polyoxalyldiamin Copolymere mit Hilfe des Phaseninversionsprozesses ist es möglich, die Membranen (M) einfach und kostengünstig mit einer ausreichenden mechanischen Stabilität und hoher Durchflussrate herzustellen. Eine hohe mechanische Stabilität der Membranen (M), u.a. gegenüber dem Druck des zu trennenden Stoffgemisches, ist für einen technischen Einsatz der Membranen (M) jedoch zwingend erforderlich. Insbesondere beim Einsatz von Membranen in der Reversen Osmose, Ultra-, Nano-, Mikrofiltation sowie Gastrennung und Pervaporationsanlagen werden Membranen benötigt, die sehr hohen mechanischen Belastungen standhalten können.

Zusätzlich sorgen die im Polymer vorhandenen Amid-Gruppierungen der Copolymere für eine ausreichende physikalische Vernetzung der Membranen (M) über Wasserstoffbrücken nach der Phaseninversion. Die Flexibilität bleibt dabei erhalten. Ein mögliches Kollabieren der porösen Strukturen nach dem Phaseninversionsprozess, auch bei höheren Temperaturen, wurde nicht beobachtet. In den meisten Fällen wird dabei eine aufwändige zusätzliche Vernetzung überflüssig. Darüber hinaus verändern die Amid-Gruppierungen der Organopolysiloxan/- Polyharnstoff/Polyurethan/Polyamid/Polyoxalyldiamin Copolymere die Diffusion und Löslichkeit der zu trennenden Moleküle, was in den meisten Fällen zu einer Verbesserung der Selektivität der Membranen (M) gegenüber reinen Siliconen führt.

Die Membranen (M) weisen gegenüber Membranen des Stands der Technik eine deutlich höhere Durchflussrate und eine deutlich verbesserte Mechanik bei dabei gleich bleibenden Materialeinsatz und einfacherer Herstellung auf.

Obwohl die Selektivitäten der in der Literatur bekannten Silicone in manchen Fällen für die Trennung von Gasgemischen ausreichend erscheinen, sind die erzielbaren Gasflüsse der Membranen zu gering, was ihre Gesamtperformance stark negativ beeinflusst und damit auch den technischen Einsatz stark behindert.

Weiterhin lässt sich die Porenstruktur der Membranen (M) in einem weiten Bereich einfach variieren. Damit lassen sich auch Membranapplikationen, wie z.B. Mikrofiltration oder auch H₂O-Dampf/H₂O-flüssig-Trennung realisieren, die mit den bisher hergestellten Membranen aus Silicon-Copolymeren nicht erreichbar waren.

Ebenso lassen sich, im Vergleich zu den meisten kommerziellen Membranen, auch hydrophobe Medien leicht trennen.

Die porösen Membranen (M) aus Organopolysiloxan/Polyharnstoff/- Polyurethan/Polyamid/Polyoxalyldiamin Copolymere weisen somit insgesamt gegenüber reinen Siliconen- oder anderen Silicon-Copolymer-Membranen ein deutlich verbessertes Eigenschaftsprofil hinsichtlich sehr wichtiger Membraneigenschaften auf.

Die Membranen (M) zeichnen sich ferner dadurch aus, dass sie eine ausgezeichnete Lagerstabilität aufweisen. Das heißt, dass die Membranen (M) nach einer Lagerzeit von 4 Monaten keine signifikanten Veränderungen in der Trennleistung aufweisen.

Vorzugsweise bedeutet **R** einen einwertigen, Kohlenwasserstoffrest, insbesondere Alkylrest mit 1 bis 6 Kohlenstoffatomen, insbesondere nicht substituiert. Besonders bevorzugte Reste **R** sind Methyl, Ethyl, Vinyl und Phenyl.

Vorzugsweise bedeutet **R^{H}** Wasserstoff oder einen einwertigen, Alkylrest mit 1 bis 6 Kohlenstoffatomen oder einen Arylrest mit 6 bis 22 Kohlenstoffatomen, insbesondere nicht substituiert. Besonders bevorzugte Reste **R^{H}** sind Methyl, Ethyl, n-Propyl, i-Propyl und Phenyl.

Vorzugsweise bedeutet **X** einen Alkylen-Rest mit 2 bis 10, insbesondere 3 bis 6 Kohlenstoffatomen. Vorzugsweise ist der Alkylen-Rest **X** nicht unterbrochen.

Vorzugsweise bedeutet **Y** einen Kohlenwasserstoffrest mit 3 bis 13 Kohlenstoffatomen, der vorzugsweise nicht substituiert ist. Vorzugsweise bedeutet **Y** einen Aralkylen-, Alkylaryl-, linearen oder cyclischen Alkylen-Rest.

Vorzugsweise bedeutet **D** einen Alkylenrest mit mindestens 2, insbesondere mindestens 4 Kohlenstoffatomen und höchstens 12 Kohlenstoffatomen. Ebenfalls vorzugsweise bedeutet **D** einen Polyoxyalkylenrest, insbesondere Polyoxyethylenrest oder Polyoxypropylenrest mit mindestens 20, insbesondere mindestens 100 Kohlenstoffatomen und höchstens 800, insbesondere höchstens 200 Kohlenstoffatomen. Vorzugsweise ist der Rest **D** nicht substituiert.

**B** bedeutet vorzugsweise einen funktionellen oder nichtfunktionellen organischen oder siliziumorganischen Rest. Beispielsweise bedeutet **B** eine Organosilylgruppe, wie beispielsweise Alkylsilyl-, Alkoxysilyl- oder Oximosilyl-Gruppe, insbesondere mit 1 bis 4 Kohlenstoffatomen, wie beispielsweise Methoxy- oder Ethoxysilyl-Gruppe, ein Wasserstoff, eine Acylgruppe, die über kovalente Bindungen mit dem Polymer verbunden sind. **B** kann weiterhin einen radikalisch oder ionisch polymerisierbaren Rest, wie beispielsweise ein Vinyl-, Acryl-, Methacryl-, Acrylamid- oder Methacrylamidrest, oder auch einen Epoxidrest, wie beispielsweise Propylenoxidrest, bedeuten. Weiterhin kann **B** eine gegebenenfalls substituierte Alkylgruppe mit vorzugsweise 1 bis 20 Kohlenstoffatomen, eine gegebenenfalls substituierte Arylgruppe mit vorzugsweise 6 bis 22 Kohlenstoffatomen oder Alkylarylgruppe, welche substituiert oder unsubstituiert sein kann, bedeuten. Besonders bevorzugt ist **B** eine Methoxysilylgruppe, Ethoxysilylgruppe, ein Wasserstoff, eine Aminoalkylgruppe oder eine Isocyanat enthaltende Gruppe. Weiterhin kann **B** einen Isocyanatrest bedeuten.

**B'** bedeutet vorzugsweise einen funktionellen oder nichtfunktionellen organischen oder siliziumorganischen Rest. Beispielsweise bedeutet **B'** eine Organosilylgruppe, ein Wasserstoff, eine Aminoalkylgruppe, eine Hydroxygruppe oder eine NCO-Gruppe, die über kovalente Bindungen mit dem Polymer verbunden sind. **B'** kann weiterhin einen radikalisch oder ionisch polymerisierbaren Rest, wie beispielsweise ein Vinyl-, Acryl-, Methacryl-, Acrylamid- oder Methacrylamidrest, oder auch einen Epoxidrest, wie beispielsweise Propylenoxidrest, bedeuten. Weiterhin kann **B'** eine gegebenenfalls substituierte Alkylgruppe mit vorzugsweise 1 bis 20 Kohlenstoffatomen, eine gegebenenfalls substituierte Arylgruppe mit vorzugsweise 6 bis 22 Kohlenstoffatomen oder Alkylarylgruppe, welche substituiert oder unsubstituiert sein kann, bedeuten. Besonders bevorzugt ist **B'** eine Methoxysilylgruppe, Ethoxysilylgruppe, ein Wasserstoff, eine Aminoalkylgruppe, eine Hydroxygruppe oder eine Isocyanat enthaltende Gruppe.

**n, m** bedeuten vorzugsweise eine Zahl von mindestens 3, besonders bevorzugt mindestens 15, insbesondere mindestens 40 und vorzugsweise höchstens 800, besonders bevorzugt höchstens 400, insbesondere höchstens 250.

Vorzugsweise bedeutet **a** eine Zahl von höchstens 50.

Wenn **b** ungleich 0, bedeutet **b** vorzugsweise eine Zahl von höchstens 50, insbesondere höchstens 25.

**c** bedeutet vorzugsweise eine Zahl von höchstens 10, insbesondere höchstens 5.

Vorzugsweise bedeuten mindestens 30%, besonders bevorzugt mindestens 60%, der Reste **R^{H}** Wasserstoff.

Vorzugsweise bestehen die porösen Membranen (M) mindestens zu 50%, besonders bevorzugt mindestens zu 80%, insbesondere mindestens zu 90%, besser mindestens zu 95% aus Organopolysiloxan/Polyharnstoff/Polyurethan/Polyamid/Polyoxalyldiamin Copolymeren der allgemeinen Formel (1).

Charakteristisch für Membranen, die mit dem Phaseninversionsprozess, auch als Loeb-Sourirajan-Prozess bezeichnet, hergestellt werden, ist ihr assymmetrischer Aufbau mit einer dünnen trennselektiven Schicht und einem porösen Unterbau, der für die mechanische Stabilität sorgt. Derartige Membranen sind besonders bevorzugt.

Gegenstand der Erfindung ist auch ein Verfahren zur Herstellung der porösen Membranen (M) aus Organopolysiloxan/Polyharnstoff/Polyurethan/Polyamid/Polyoxalyldiamin Copolymeren der vorstehenden allgemeinen Formel (1) nach dem Phaseninversionsprozess, bei dem aus einer Lösung von Organopolysiloxan/Polyharnstoff/Polyurethan/Polyamid/Polyoxalyldiamin Copolymeren in Lösungsmittel (L) ein Film hergestellt wird und der Lösungsmittel (L) enthaltende Film mit einem Fällmedium (F) in Kontakt gebracht wird.

Vorzugsweise werden anschliessend Lösungsmittel (L) und Fällmedium (F) durch Verdampfen entfernt.

Selbstverständlich können die Membranen (M) auch auf andere Weise hergestellt werden.

Die Herstellung der Membranen (M) nach dem Phaseninversionsprozess erfolgt vorzugsweise in einem einstufigen Verfahren. Dabei wird der noch Lösungsmittel (L) enthaltende Polymerfilm in ein mit Fällmedium (F) gefülltes Fällungsbad getaucht. Das Fällmedium (F) ist vorzugsweise eine Flüssigkeit, in welcher das Polymer der allgemeinen Formel (1) höchstens zu 2 Gew.-% bei 20 °C löslich ist. In einer bevorzugten Ausführungsform der Erfindung löst sich das Lösungsmittel (L) oder Lösungsmittelgemisch (L), welches für die Herstellung der Polymerlösung verwendet wurde, in dem Fällmedium (F).

In einer besonders bevorzugten Ausführung der Erfindung handelt es sich bei dem Fällmedium (F)um deionisiertes Wasser.

In einer weiteren bevorzugten Ausführung der Erfindung handelt es sich bei dem Fällmedium (F)um Acetonitril.

Zur Herstellung der Membranen (M) werden die Organopolysiloxan/Polyharnstoff/Polyurethan/Polyamid/Polyoxalyl diamin Copolymere in einem organischen oder anorganischen Lösungsmittel (L) oder deren Mischungen gelöst.

Bevorzugte organische Lösemittel (L) sind Kohlenwasserstoffe, halogenierte Kohlenwasserstoffe, Ether, Alkohole, Aldehyde, Ketone, Säuren, Anhydride, Ester, N-haltige Lösemittel und S-haltige Lösemittel.

Beispiele für gängige Kohlenwasserstoffe sind Pentan, Hexan, Dimetyhlbutan, Heptan, Hex-1-en, Hexa-1,5-dien, Cyclohexan, Terpentin, Benzol, Isopropylbenzol, Xylol, Toluol, Naphthalin, sowie Terahydronaphthalin. Beispiele für gängige halogenierte Kohlenwasserstoffe sind Fluoroform, Perfluorheptan, Methylenchlorid, Chloroform, Tetrachlorkohlenstoff, 1,2-Dichlorethan, 1,1,1-Trichlorethan, Pentylchlorid, Bromoform, 1,2-Dibromethan, Methyleniodid, Fluorbenzol, Chlorbenzol sowie 1,2-Dichlorbenzol. Beispiele für gängige Ether sind Diethylether, Butylethylether, Anisol, Diphenylether, Ethylenoxid, Tetrahydrofuran, Furan sowie 1,4-Dioxan. Beispiele für gängige Alkohole sind Ethanol, Ethanol, Propanol, Butanol, Octanol, Cyclohexanol, Benzylalkohol, Ethylenglykol, Ethylenglycolmonomethylether, Propylenglycol, Butylglycol, Glycerol, Phenol sowie m-Kresol. Beispiele für gängige Aldehyde sind Acetaldehyd und Butyraldehyd. Beispiele für gängige Ketone sind Aceton, Diisobutylketon, Butan-2-on, Cyclohexanon sowie Acetophenon. Gängige Beispiele für Säuren sind Ameisensäure und Essigsäure. Gängige Beispiele für Anhydride sind Essigsäureanhydrid und Maleinsäureanhydrid. Gängige Beispiele von Estern sind Essigsäuremetyhlester, Essigsäureethylester, Essigsäurebutylester, Essigsäurephenylester, Glyceroltriacetat, Oxalsäurediethylester, Dioctylsebacat, Benzoesäuremethylester, Phthalsäuredibutylester sowie Phosphorsäuretrikresylester. Gängige Beispiele von Stickstoffhaltigen Lösemittel sind Nitromethan, Nitrobenzol, Butyronitril, Acetonitril, Benzonitril, Malononitril, Hexylamin, Aminoethanol, N,N-Diethylaminoethanol, Anilin, Pyridin, N,N-Dimethylanilin, N,N-Dimethylformamid, N-Methylpiperazin sowie 3-Hydroxypropionitril. Gängige Beispiele für schwefelhaltige Lösemittel (L) sind Schwefelkohlenstoff, Methanthiol, Dimethylsulfon, Dimethylsulfoxid sowie Thiophen.

Gängige Beispiele für anorganische Lösemittel sind Wasser, Ammoniak, Hydrazin, Schwefeldioxid, Siliciumtetrachlorid und Titantetrachlorid.

In einer bevorzugten Ausführungsform der Erfindung werden die Organopolysiloxan/Polyharnstoff/Polyurethan/Polyamid/Polyoxalyl diamin Copolymeren der allgemeinen Formel (1) in Lösemittelgemischen (L) gelöst. Gängige Beispiel für binäre Lösemittelgemische (L) sind Isopropanol-N-Methylpiperazin, Isopropanol-Aminoethanol, Isopropanol-N,N-Diethylaminoethanol, Isopropanol-Dimetyhlformamid, Isopropanol-Tetrahydrofuran sowie Isopropanol-Dimethylsulfoxid. Bevorzugt sind dabei Mischungsvarhältnissen von 5:1 bis 1:5, besonders bevorzugt ist der Bereich von 4:1 bis 1:4 und ganz bevorzugt der Bereich 3:1

bis 1:3.

In einer weiteren besonders bevorzugten Ausführungsform der Erfindung werden die Organopolysiloxan/Polyharnstoff/- Polyurethan/Polyamid/Polyoxalyldiamin Copolymere der allgemeinen Formel (1) in tertiären Lösemittelgemischen (L) gelöst. Gängige Beispiel für tertiäre Lösemittelgemische sind Isopropanol-N-Methylpiperazin-Aminoethanol, Isopropanol-N-Methylpiperazin-Dimetyhlformamid, Isopropanol-N-Methylpiperazin-Tetrahydrofuran, Isopropanol-N-Methylpiperazin-Dimethylsulfoxid, Isopropanol-Aminoethanol-Dimetyhlformamid, Isopropanol-N-Methylpiperazin-N,N-Diethylaminoethanol, Isopropanol-Dimethylformamid-N.N-Diethylaminoethanol, Isopropanol-Aminoethanol-Tetrahydrofuran, Isopropanol-Aminoethanol-Dimethylsulfoxid sowie Isopropanol-Dimetyhlformamid-Dimethylsulfoxid. Bevorzugte Mischungsverhältnisse sind dabei 3:1:1, 2:1:1, 1:1:1, 1:2:2 und 1:2:3.

Bevorzugte Lösemittel (L) für die Organopolysiloxan/Polyharnstoff/Polyurethan/Polyamid/Polyoxalyldiamin Copolymere lösen sich dabei in dem für die Phaseninversion Fällmittel (F). Geeignete Lösemittelpaare (L) sind Wasser-Isopropanol, Wasser-Tetrahydrofuran, Wasser-Dimethylformamid, Wasser- N-Methylpiperazin, Wasser-Dimethylsulfoxid, Wasser-Aminoethanol, Wasser-N,N-Diethylaminoethanol sowie die beschriebenen binären und tertiären Lösemittelgemische (L).

In einer Ausführungsform der Erfindung wird das Copolymer der allgemeinen Formel (1) vorgelegt und im Anschluss daran das Lösemittel bzw. Lösemittelgemisch (L) hinzugegeben.

In einer bevorzugten Ausführungsform der Erfindung wird das Lösemittel bzw. Lösemittelgemisch (L) vorgelegt und im Anschluss daran das Copolymer der allgemeinen Formel (1) hinzugegeben.

In einer besonders bevorzugten Ausführungsform wird das Copolymer der allgemeinen Formel (1) vorgelegt, mit N-Methylpiperazin gemischt und dann mit Isopropanol vollständig aufgelöst.

Die Konzentration der Polymerlösung liegt in einem Bereich von 5 bis 60 Gew.-%, bezogen auf das Gewicht des Copolymers der allgemeinen Formel (1). In einer bevorzugten Ausführungsform der Erfindung beträgt die Konzentration der Polymerlösung 10 bis 40 Gew.-%. In einer besonders bevorzugten Ausführungsform der Erfindung liegt die Konzentration der Polymerlösung in einem Bereich von 15 bis 30 Gew.-%.

Die Copolymere der allgemeinen Formel (1) werden mit üblichen Methoden gelöst, z.B. Rühren, Schütteln oder Mixen. Besonders bevorzugt werden die Copolymere durch Schütteln im Lösemittel (L) bzw. Lösemittelgemisch (L) gelöst.

In einer weiteren bevorzugten Ausführungsform der Erfindung wird die Synthese der für die Herstellung der erfindungsgemäßen Membranen verwendeten Organopolysiloxan/Polyharnstoff/Polyurethan/Polyamid/Polyoxalyldiamin Copolymere der allgemeinen Formel (1) in Lösung durchgeführt. Damit können als Lösemittel bereits die Lösemittel (L) eingesetzt werden, welche für die Herstellung der Membran benötigt werden. In manchen Fällen kann daher auf eine aufwändige Isolation des Polymers nach der Synthese verzichtet werden. Dies verringert den Herstellungsaufwand und die Copolymere der allgemeinen Formel (1) liegen bereits gelöst vor.

Falls die Syntheselösung nicht die passende Konzentration aufweist, kann Lösemittel zugegeben oder abdestilliert werden. Weiterhin können natürlich auch zusätzliche Lösemittel oder Additive nach oder während der Synthese zu dem in Lösung hergestellten Copolymer der allgemeinen Formel (1) hinzugegeben werden.

Durch Erhitzen der Lösungen kann der Lösungsvorgang teilweise erheblich beschleunigt werden. Bevorzugt sind Temperaturen von 10 bis 160 °C. Weiterhin bevorzugt ist der Temperaturbereich von 22 bis 40 °C. Besonders bevorzugt ist die Herstellung der Polymerlösung bei Raumtemperatur.

Die Lösungen werden solange gemischt, bis eine homogene Polymerlösung entsteht, in der das Copolymer der allgemeinen Formel (1) vollständig gelöst ist. Die Zeit für diesen

Löseprozess beträgt z.B. zwischen 5 min und 48 h. In einer bevorzugten Ausführungsform der Erfindung lösen sich die

Copolymere der allgemeinen Formel (1) zwischen 1 h und 24 h. In einer besonders bevorzugten Ausführungsform der Erfindung lösen sich die Copolymere der allgemeinen Formel (1)innerhalb von 2 h bis 8 h vollständig in dem Lösemittel.

In einer Ausführungsform der Erfindung werden der Polymerlösung weitere Additive hinzugegeben. Typische Additive sind anorganische Salze und im Fällungsmedium (F) lösliche Polymere. Gängige anorganische Salze sind LiF, NaF, KF, LiCl, NaCl, KCl, MgCl₂, CaCl₂, ZnCl₂ und CdCl₂. In einer bevorzugten Auführungsform der Erfindung werden wasserlösliche Polymere der Polymerlösung hinzugegeben. Gängige wasserlösliche Polymere sind Poly(ethylen glycole), Poly(propylen glykole), Poly(propylen ethylen glykole), Poly(vinyl pyrrolidine), Poly(vinyl alkohole) und sulfonierte Polystyrole.

Ein Großteil der Additive löst sich im Fällungsmedium (F) bei der Phaseninversion und ist in der Membran (M) nicht mehr enthalten. Reste der Additive, die nach der Herstellung noch in der Membran verbleiben, können die Membran insgesamt hydrophiler machen.

Dabei können auch Gemische von unterschiedlichen Additiven in die Polymerlösung mit eingearbeitet werden. So wird in einer besonders bevorzugten Ausführungsfrom der Erfindung 2 Gew.-% LiCl und 3 Gew.-% Poly(vinyl pyrrolidin) zur Polymerlösung hinzugegeben. Durch die Additive wird die Membran (M) nach dem Phaseninversionsprozess deutlich poröser.

Die Konzentration der Additive in der Polymerlösung beträgt zwischen 0,01 Gew.-% und bis zu 50 Gew.-%. In einer bevorzugten Ausführungsform der Erfindung beträgt die Konzentration 0,1 Gew.-% bis 15 Gew.-%. In einer besonders bevorzugten Ausführungsform der Erfindung beträgt die Konzentration der Additive 1 bis 5 Gew.-%.

Die Polymerlösungen für die Herstellung der Membranen (M) können zudem die in Formulierungen üblichen Additive und Zusätze enthalten. Zu nennen wären hier u.a. Verlaufshilfsmittel, oberflächenaktive Substanzen, Haftvermittler, Lichtschutzmittel wie UV-Absorber und/oder Radikalfänger, Thixotropiermittel sowie weitere Fest- und Füllstoffe. Zur Erzeugung der jeweils gewünschten Eigenschaftsprofile der Membranen (M) sind derartige Zusätze bevorzugt.

In einer bevorzugten Ausführungsform der Erfindung enthalten die Lösungen für die Herstellung der Membranen (M) Fungizide oder Bakterizide, wie Methylisothiazolone oder Benzisothiazolone. Damit kann die Bildung von organischen Ablagerungen an den Membranen (M) verhindert werden.

In einer ebenfalls bevorzugten Ausführungsform der Erfindung enthalten die porösen Membranen (M) noch einen Anteil an Partikeln.

Partikelgefüllte poröse Membranen (M) aus Organopolysiloxan/- Polyharnstoff/Polyurethan/Polyamid/Polyoxalyldiamin Copolymeren eignen sich besonders für den Einsatz als Membranen in Anlagen zur Abtrennung von Wasser aus Druckluftsystemen.

Die bevorzugt eingesetzten Partikel zeichnen sich dadurch aus, dass sie eine mittlere Partikelgröße, gemessen als mittlerer hydrodynamischer Äquivalenzdurchmesser in Form des Z-Average durch Photonenkorrelationsspektroskopie, von kleiner 1000 µm, bevorzugt 100 µm bis 10 µm und besonders bevorzugt von 1 µm bis 10 nm aufweisen.

Die Partikel können dabei in den Membranen (M) einen Verteilungsgradienten aufweisen oder homogen verteilt sein. In Abhängigkeit der Anwendung kann sich sowohl eine homogene Verteilung als auch eine ungleichmäßige Verteilung der Partikel bezüglich der mechanischen Stabilität, der Permeabilität von Gasen und Flüssigkeiten sowie der Größenselektion vorteilhaft auswirken.

Die Membranen (M) weisen, bezogen auf das Gesamtgewicht, vorzugsweise einen Gehalt an Partikeln von 0 - 90 Gew.-% auf, bevorzugt zwischen 0 - 40 Gew.-%, besonders bevorzugt 0 - 30 Gew.-% und ganz besonders bevorzugt 0 - 20 Gew.-%.

Dabei können die Membranen (M) einen oder mehrere verschiedene Partikeltypen enthalten, beispielsweise Siliciumdioxid sowie Aluminophosphat.

Als Partikel eignen sich aus Gründen der technischen Handhabbarkeit Oxide mit kovalentem Bindungsanteil in der Metall-Sauerstoff-Bindung, vorzugsweise Oxide der 3. Hauptgruppe, wie Bor-, Aluminium-, Gallium- oder Indiumoxide, der 4. Hauptgruppe, wie Siliciumdioxid, Germaniumdioxid, Zinnoxid, Zinndioxid, Bleioxid, Bleidioxid, oder Oxide der 4. Nebengruppe, wie Titanoxid, Zirkoniumoxid und Hafniumoxid. Weitere Beispiele sind Nickel-, Cobalt-, Eisen-, Mangan-, Chrom- und Vanadiumoxide.

Zudem eignen sich Metalle mit oxidierter Oberfläche, Zeolithe (eine Auflistung geeigneter Zeolithe findet sich in: Atlas of Zeolite Framework Types, 5th edition, Ch. Baerlocher, W.M. Meier D.H. Olson, Amsterdam: Elsevier 2001), Silikate, Aluminate, Aluminophosphate, Titanate und Aluminiumschichtsilikate (z.B. Bentonite, Montmorillonite, Smektite, Hektorite), wobei die Partikel bevorzugt eine spezifische Oberfläche von mindestens 0,1, besonders bevorzugt von mindestens 10 m²/g und höchstens 1000, besonders bevorzugt von höchstens 500 m²/g, aufweisen (gemessen nach der BET-Methode nach DIN 66131 und 66132). Die Partikel, die bevorzugt einen mittleren Durchmesser von kleiner 10 µm, besonders bevorzugt kleiner 1000 nm, aufweisen, können als Aggregate (Definition nach DIN 53206) und Agglomerate (Definition nach DIN 53206) vorliegen, die in Abhängigkeit von der äußeren Scherbelastung (z.B. bedingt durch die Messbedingungen) Größen von 1 bis 1000 µm aufweisen können.

Als Partikel besonders bevorzugt ist pyrogene Kieselsäure, die in einer Flammenreaktion aus Organosiliziumverbindungen hergestellt wird, z.B. aus Siliziumtetrachlorid oder Methyldichlorsilan, oder Hydrogentrichlorsilan oder Hydrogenmethyldichlorsilan, oder anderen Methylchlorsilanen oder Alkylchlorsilanen, auch im Gemisch mit Kohlenwasserstoffen, oder beliebigen verflüchtigbaren oder versprühbaren Gemischen aus Organosiliziumverbindungen, wie genannt, und Kohlenwasserstoffen, z.B. in einer Wasserstoff-Sauerstoff-Flamme, oder auch einer Kohlenmonoxid-Sauerstoffflamme, hergestellt wird. Die Herstellung der Kieselsäure kann dabei wahlweise mit und ohne Zusatz von Wasser erfolgen, zum Beispiel im Schritt der Reinigung; bevorzugt ist kein Zusatz von Wasser.

Pyrogen hergestellte Kieselsäure oder Siliziumdioxid ist beispielsweise bekannt aus Ullmann's Enzyklopädie der Technischen Chemie 4. Auflage, Band 21, Seite 464.

Die pyrogene Kieselsäure hat eine spezifische BET-Oberfläche, gemessen gemäß DIN EN ISO 9277 / DIN 66132 von 10 m²/g bis 600 m²/g, bevorzugt von 50 m²/g bis 400 m²/g.

Vorzugsweise weist die pyrogene Kieselsäure eine Stampfdichte, gemessen gemäß DIN EN ISO 787-11 von 10 g/l bis 500 g/l, bevorzugt von 20 g/l bis 200 g/l und besonders bevorzugt von 30 g/l bis 100 g/l auf.

Vorzugsweise weist die pyrogene Kieselsäure eine fraktale Dimension der Oberfläche von vorzugsweise kleiner oder gleich 2,3 auf, besonders bevorzugt von kleiner oder gleich 2,1, im besonderen bevorzugt von 1,95 bis 2,05, wobei die fraktale Dimension der Oberfläche Dₛ hierbei definiert ist als: Partikel-Oberfläche A ist proportional zum Partikel-Radius R hoch Dₛ.

Vorzugsweise weist die Kieselsäure eine fraktale Dimension der Masse Dₘ von vorzugsweise kleiner oder gleich 2,8, bevorzugt kleiner oder gleich 2,3, besonders bevorzugt von 1,7 bis 2,1 auf, wie z.B. gegeben in F. Saint-Michel, F. Pignon, A. Magnin, *J. Colloid Interface Sci.* **2003**, *267*, 314. Die fraktale Dimension der Masse Dₘ ist hierbei definiert als: Partikel-Masse M ist proportional zum Partikel-Radius R hoch Dₘ.

Vorzugsweise weist die unmodifizierte Kieselsäure eine Dichte an Oberflächen-Silanolgruppen SiOH von kleiner als 2,5 SiOH / nm², vorzugsweise kleiner 2,1 SiOH / nm², bevorzugt von kleiner als 2 SiOH / nm², besonders bevorzugt von 1,7 bis 1,9 SiOH / nm² auf, bestimmt gemäß einer Methode wie gegeben in G.W. Sears, Anal. Chem. 28 (1956) 1981.

Es können auf nasschemisch hergestelltem Weg oder bei hoher Temperatur (> 1000 °C) hergestellte Kieselsäuren eingesetzt werden. Besonders bevorzugt sind pyrogen hergestellte Kieselsäuren. Es können auch hydrophile Kieselsäuren eingesetzt werden, die frisch hergestellt direkt aus dem Brenner kommen, zwischengelagert oder bereits handelsüblich verpackt sind.

Es können auch hydrophobierte Metalloxide oder Kieselsäuren, z.B. handelsübliche Kieselsäuren, eingesetzt werden.

Es können Gemische aus verschiedenen Metalloxiden oder Kieselsäuren eingesetzt werden, so z.B. Mischungen aus Metalloxiden oder Kieselsäuren unterschiedlicher BET-Oberfläche, oder Mischungen aus Metalloxiden mit unterschiedlichem Hydrophobier- oder Silyliergrad.

In einer weiteren bevorzugten Ausführungsform der Erfindung werden als Partikel kolloidale Silizium- oder Metalloxide eingesetzt, die im Allgemeinen als Dispersion der entsprechenden Oxidteilchen von Submikrongröße in einem wäßrigen oder organischen Lösungsmittel vorliegen. Dabei können unter anderem die Oxide der Metalle Aluminium, Titan, Zirkonium, Tantal, Wolfram, Hafnium und Zinn oder die entsprechenden Mischoxide verwendet werden. Besonders bevorzugt sind Kieselsole. Beispiele für kommerziell erhältliche Kieselsole, die sich zur Herstellung der Partikel (PS) eignen, sind Kieselsole der Produktserien LUDOX® (Grace Davison), Snowtex® (Nissan Chemical), Klebosol® (Clariant) und Levasil® (H.C. Starck), oder solche Kieselsole, die sich nach dem Stöber-Verfahren herstellen lassen.

In einer weiteren bevorzugten Ausführungsform der Erfindung werden als Partikel Organopolysiloxane der allgemeinen Formel [4],

[R³₃SiO_{1/2}]ᵢ[R³₂SiO_{2/2}]ⱼ[R³SiO_{3/2}]ₖ[SiO_{4/2}]ₗ [4]

eingesetzt, wobei
- **R³**: eine OH-Funktion, einen gegebenenfalls halogen-, hydroxyl-, amino-, epoxy-, phosponato-, thiol-, (meth)acryl-, carbamat- oder auch NCO-substituierten Kohlenwasserstoffrest mit 1-18 Kohlenstoffatomen, wobei die Kohlenstoffkette durch nicht benachbarte Sauerstoff-, Schwefel-, oder **NR³**-Gruppen unterbrochen sein kann,
- **R^{3'}**: die Bedeutungen von **R^{H}**,
- **i, j**: einen ganzzahligen Wert von größer oder gleich 0 bedeuten,
- **k, l**: einen ganzzahligen Wert größer 0 bedeuten,
mit der Maßgabe, dass i + j + k + l größer oder gleich 3, insbesondere mindestens 10 sind.

Die eingesetzten Partikel können darüber hinaus, um die Verträglichkeit mit der Polymermatrix zu verbessern, noch eine zusätzliche Oberflächenfunktionalisierung aufweisen.

Gängige funktionelle Gruppen für die Modifikation der Partikel sind dabei neutral, anionisch, basisch oder zwitterionisch geladen. Die zur Modifizierung eingesetzten Verbindungen, vorzugsweise Alkoxysilane, weisen z.B. Alkyl-, Aryl-, Amino-, Thiol-, Carbonsäure-, Sulfonsäure-, Halogen-, Epoxi-, Hydroxy-, Phosphonato-, (Meth)acryl--, oder Isocyanat-Gruppen auf.

Die zur Modifizierung der Partikel eingesetzten Verbindungen werden dabei vorzugsweise in einer Menge größer 1 Gew.-% (bezogen auf die Partikel), bevorzugt größer 5 Gew.-%, besonders bevorzugt größer 8 Gew.-% eingesetzt.

Zur Herstellung der Membranen (M) werden die beschriebenen Polymerlösungen vorzugsweise auf ein Substrat aufgebracht oder versponnen. Die auf Substrate aufgebrachte Polymerlösungen werden dabei zu Flachmembranen weiterverarbeitet, während die versponnen Polymerlösungen zu Hohlfasermembranen gefertigt werden.

In einer bevorzugten Ausführungsform der Erfindung werden die Polymerlösungen mit Hilfe eines Rakelauftrages auf ein Substrat aufgebracht.

Es hat sich als besonders vorteilhaft herausgestellt, die Polymerlösung vor dem Rakelauftrag mit konventionellen Filterkartuschen zu filtern. Bei diesem Schritt werden große Partikel entfernt, die bei der Membranherstellung zu Fehlstellen führen können. Die Porenweite der Filter beträgt dabei vorzugsweise 0,2 µm bis 100 µm. Bevorzugte Porenweiten liegen 0,2 µm bis 50 µm. Besonders bevorzugte Porenweite sind bei 0,2 bis 10 µm.

Die Höhe des Polymerfilms wird dabei wesentlich von der Spalthöhe des verwendeten Rakels beeinflusst. Die Spalthöhe des Rakels beträgt vorzugsweise mindestens 1 µm, besonders bevorzugt mindestens 20 µm, insbesondere mindestens 50 pm und vorzugsweise höchstens 2000 µm, besonders bevorzugt höchstens 500 µm, insbesondere höchstens 300 µm. Um ein Verlaufen des Polymerfilms nach dem Rakelauftrag zu vermeiden, sollte die Rakelhöhe nicht zu hoch eingestellt werden.

Die Breite des Rakelauftrags ist grundsätzlich nicht limitiert. Typische Breiten liegen im Bereich von 5 cm bis 2 m. In einer bevorzugten Ausführungsform der Erfindung beträgt die Rakelbreite mindestens 10 cm und höchstens 1 m, insbesondere höchstens 50 cm.

Eine weitere Möglichkeit, den nassen Polymerfilm herzustellen, besteht durch die Meniskusbeschichtung eines passenden Substrates mit der Polymerlösung. Weitere Möglichkeiten die Polymerfilme herzustellen schließen alle üblichen Verfahren ein, z.B. Gießen, Sprühen, Siebdruck, Tiefdruck und Spin-on-Disk.

Die Filmdicke wird durch die Viskosität der Polymerlösung und durch die Filmbildungsgeschwindigkeit eingestellt.

Die Geschwindigkeit des Auftrages muss grundsätzlich so gewählt werden, dass die Polymerlösung das Substrat noch benetzen kann, so dass während der Filmherstellung keine Verlaufstörungen entstehen. Typische Geschwindigkeiten betragen dabei vorzugsweise mindestens 1 cm/s, besonders bevorzugt mindestens 1,5 cm/s, insbesondere mindestens 2,5 cm/s und vorzugsweise höchstens 1 m/s, besonders bevorzugt höchstens 0,5 m/s, insbesondere höchstens 10 cm/s.

In einer bevorzugten Ausführungsform der Erfindung findet der Auftrag bei Temperaturen über 20 °C statt. In einer besonders bevorzugten Ausführungsform der Erfindung findet der Auftrag in einem Temperaturbereich von 25 bis 50 °C statt.

Grundsätzlich bestehen mehrere Möglichkeiten, die Temperatur einzustellen. Sowohl die hergestellten Polymerlösungen als auch die verwendeten Substrate können auf die Temperatur eingestellt werden. In machen Fällen kann es von Vorteil sein, sowohl die Polymerlösung als auch das Substrat auf die gewünschte Temperatur aufzuheizen.

In einer bevorzugten Ausführungsform der Erfindung wird die Polymerlösung auf 40 °C bis 60°C temperiert und auf das auf 20°C bis 25°C eingestellte Substrat aufgebracht.

Als Substrate für die beschriebenen Polymerfilme sind grundsätzlich alle ebenen Oberflächen geeignet. Als Substratmaterial sind besonders Metalle, Polymere und Gläser geeignet.

Geeignete Metalle bestehen dabei aus Titan, Eisen, Kupfer, Aluminium und deren Legierungen.

Als Substrate können alle zu Folien oder Vliesen verarbeitbaren Polymere eingesetzt werden. Beispiele für derartige Polymere sind Polyamide, Polyimide, Polyetherimide, Polycarbonate, Polybenzimidazole, Polyethersulfone, Polyester, Polysulfone, Polytetrafluorethylene, Polyurethane, Polyvinylchloride, Polyetherglykole, Polyethylenterephthalat (PET), Polyaryletherketone, Polyacrylnitril, Polymethylmethacrylate, Polyphenylenoxide, Polycarbonate, Polyethylene, Polypropylene und deren möglichen Copolymere.

Als Glassubstrate können alle gängigen Gläser verwendet werden. Beispiele sind z.B. Quarzglas, Bleiglas, Floatglas oder Kalk-Natron-Glas.

Die beschrieben Materialien können dabei als Platten, Folien, Netze, gewoben und nicht gewoben, sowie als Vliese vorliegen. Bei der Herstellung der Membranen auf gewobenen oder nicht gewobenen Netzen sowie auf Vliesstoffen ist der Abstandshalter bereits mit der Membran verbunden.

In einer bevorzugten Ausführungsform der Erfindung wird der Polymerfilm auf einer PET-Folie mit einer Schichtdicke von 100 µm bis 50 µm aufgebracht. In einer ebenfalls bevorzugten Ausführungsform der Erfindung wird der Polymerfilm auf einer Glasplatte mit einer Schichtdicke von 0,5 bis 1,5 mm hergestellt.

In einer besonders bevorzugten Ausführungsform der Erfindung wird die poröse Membran auf Vliesstoffen aufgebracht. Diese Membran-Vliesstoff-Verbundwerkstoffe führen bei der späteren Fertigung der Membranmodule zu Zeitersparnissen und geringen Fertigungskosten.

Die bevorzugte Herstellung der porösen Membranen auf den Vliesstoffen gliedert sich in das Aufbringen des noch nassen Polymerfilms auf dem Vlies mit anschließender Phaseninversion mit dem Fällmedium (F).

Besonders bevorzugt sind Vliesstoffe, die auf der Oberfläche keine Fehlstellen, wie z.B. Löcher oder senkrecht stehende Fasern, aufweisen.

Die poröse Membran kann dabei sowohl auf nicht gewobenen und gewobenen Vliesstoffen aufgebracht werden.

In einer bevorzugten Ausführungsform der Erfindung wird die poröse Membran auf ein nicht gewobenes Vlies aufgebracht. Bevorzugte Materialien für die eingesetzten Vliesstoffe sind Polyester, Polyethylene, Polypropylene, Polyethylene/ Polypropylene-Copolymere oder Polyethylenterephthalate.

In einer besonders bevorzugten Ausführungsform der Erfindung wird die poröse Membran (M) auf ein nicht gewobenes Polyester-Vlies aufgebracht.

In einer weiteren bevorzugten Ausführungsform der Erfindung wird die poröse Membran (M) auf einem Glasfaservlies, Carbonfaser- oder Aramidfaservlies aufgebracht.

Die Schichtdicke der Substrate für die poröse Membran (M) richtet sich dabei nach die technischen Gegebenheiten der Beschichtungsanlage und beträgt vorzugsweise mindestens 10 µm, besonders bevorzugt mindestens 50 µm, insbesondere mindestens 100 µm und vorzugsweise höchstens 2 mm, besonders bevorzugt höchstens 600 µm, insbesondere höchstens 400 µm.

Die für die Herstellung der Membranen verwendeten Substrate können dabei auf der Oberfläche mit zusätzlichen Stoffen behandelt sein. Zu nennen wären hier u.a. Verlaufshilfsmittel, oberflächenaktive Substanzen, Haftvermittler, Lichtschutzmittel wie UV-Absorber und/oder Radikalfänger. In einer bevorzugten Ausführungsform der Erfindung sind die Folien noch zusätzlich mit Ozon oder UV-Licht behandelt. Zur Erzeugung der jeweils gewünschten Eigenschaftsprofile der Membranen sind derartige Zusätze bevorzugt.

In einer weiteren bevorzugten Ausführungsform der Erfindung werden die Organopolysiloxan/Polyharnstoff/Polyurethan/Polyamid/Polyoxalyldiamin Copolymere der allgemeinen Formel (1) durch Verspinnen zu Hohlfasern verarbeitet.

Der Außendurchmesser der Faser beträgt vorzugsweise mindestens 10 µm, besonders bevorzugt mindestens 100 µm, insbesondere mindestens 200 µm, besser mindestens 300 µm und vorzugsweise höchstens 5 mm, besonders bevorzugt höchstens 2 mm, insbesondere höchstens 1000 µm.

Der maximale Innendurchmesser der Hohlfaser wird durch den maximalen Außendurchmesser begrenzt und beträgt vorzugsweise mindestens 8 µm, besonders bevorzugt mindestens 80 µm, insbesondere mindestens 180 µm, besser mindestens 280 µm und vorzugsweise höchstens 4,5 mm, besonders bevorzugt höchstens 1,9 mm, insbesondere höchstens 900 µm.

Um das Kollabieren der inneren Kanäle während des Hohlfaserherstellungsprozess zu verhindern kann in diesem Kanal ein weiteres Medium eingespritzt werden.

Bei dem Medium handelt es sich entweder um Gase oder um Flüssigkeiten.

Beispiele für typische gasförmige Medien sind Luft, Druckluft, Stickstoff, Sauerstoff oder Kohlendioxid.

Beispiele für typische flüssige Medien sind Wasser oder organische Lösemittel. Bevorzugte organische Lösemittel sind Kohlenwasserstoffe, halogenierte Kohlenwasserstoffe, Ether, Alkohole, Aldehyde, Ketone, Säuren, Anhydride, Ester, N-haltige Lösemittel und S-haltige Lösemittel.

Durch die passende Auswahl des Fällungsmediums (F) und des im Inneren der Hohlfaser applizierten Mediums kann die Phaseninversion nur von außen, nur von innen oder von beiden Seiten gleichzeitig stattfinden. Damit kann bei der Hohlfasermembran die trennselektive Schicht auf der Außenseite, Innenseite oder in der Hohlfaserwand ausgebildet werden.

Bei einer bevorzugten Ausführungsform der Erfindung wird als Fällungsmedium (F) Wasser verwendet und im Inneren der Hohlfaser Toluol eingespritzt.

Eine weitere Möglichkeit das Kollabieren der Hohlfasern zu verhindern ist die Verwendung von Vliesstoffschläuchen. Dabei wird, wie bei den Substratgebundenen Membranen, die Polymerlösung auf die Außenseite oder auf die Innenseite des Schlauches aufgebracht.

Bei der Herstellung der Hohlfasern kann ebenfalls noch eine zweite Polymerlage co-versponnen werden.

Besonders bevorzugt ist das Verspinnen bei erhöhten Temperaturen. Damit kann die Geschwindigkeit für die Herstellung der Hohlfasern erhöht werden. Typische Temperaturen bewegen sich dabei über 20°C. Besonders bevorzugt ist das Verspinnen bei Temperaturen von 20 °C bis 150 °C. In einer besonders bevorzugten Ausführungsform der Erfindung werden die Hohlfasern bei 45 bis 55°C hergestellt.

Für die Herstellung der Membranen (M) können die Filme bzw. Hohlfasern vor dem Eintauchen in das Fällungsbad für eine definierte Zeit vorgetrocknet werden.

Die Vortrocknung kann bei Umgebungsbedingungen stattfinden. In machen Fällen kann es vorteilhaft sein, die Vortrocknung bei definierten Umgebungsbedingungen, d.h. Temperatur und relative Feuchte, durchzuführen. Die Temperatur liegt dabei bei vorzugsweise mindestens 0 °C, besonders bevorzugt mindestens 10 °C, insbesondere mindestens 25 °C und vorzugsweise höchstens 150 °C, besonders bevorzugt höchstens 100 °C.

Die Länge der Vortrocknungszeit hängt von den Umgebungsbedingungen ab. Typischerweise beträgt die Vortrocknungszeit länger als 5 Sekunden.

In einer bevorzugten Ausführungsform der Erfindung beträgt die Vortrocknungszeit 7 Sekunden bis 10 Minute.

In einer besonders bevorzugten Ausführungsform der Erfindung liegt die Vortrocknungszeit 10 bis 30 Sekunden.

In einer ebenfalls bevorzugten Ausführungsform der Erfindung beträgt die Vortrocknungszeit 30 bis 1 Minuten.

Die beschriebenen Polymerfilme bzw. Hohlfasern werden nach der Herstellung in ein mit Fällmedium (F) befülltes Fällungsbad getaucht.

Das gängigste Fällmedium (F) ist Wasser. Für die Herstellung der Membranen (M) ist Wasser auch das bevorzugte Fällmedium. Weitere bevorzugte Fällmedien (F) sind Alkohole, z.B. Methanol, Ethanol, Isopropanol und längerkettige Alkohole, oder N-haltige Lösemittel, wie z.B. Acetonitril. Daneben sind allerdings auch die Lösemittel und Lösemittelgemische, die für die Herstellung der Polymerlösung beschrieben werden grundsätzlich als Fällmedium (F) geeignet. Dabei ist allerdings immer darauf zu achten, dass sich das verwendete Organopolysiloxan/Polyharnstoff/Polyurethan/Polyamid/Polyoxalyldiamin Copolymer nicht vollständig im Fällmedium (F) auflöst.

Die Temperatur des Fällmediums (F) kann dabei großen Einfluss auf die Struktur der Membran (M) nehmen. Die Temperatur des Fällmediums (F) für die Herstellung der Membranen (M) liegt zwischen der Schmelztemperatur und der Siedetemperatur des eingesetzten Fällmediums(F). Bevorzugt liegt die Temperatur in einem Bereich von 0 °C bis 80 °C. Besonders bevorzugt liegt die Temperatur in einem Bereich von 0 °C bis 30 °C. In einer besonders bevorzugten Ausführungsform der Membranen (M) beträgt die Temperatur des Fällmediums (F) 23 bis 26 °C.

Daneben kann das Fällmedium (F) auch Additive enthalten, die Einfluss auf das Ausfallen des Polymers in dem Fällungsbad haben. Typische Additive des Fällmediums (F) sind dabei anorganische Salze und im Fällmedium (F) lösliche Polymere. Gängige anorganische Salze sind LiF, NaF, KF, LiCl, NaCl, KCl, MgCl₂, CaCl₂, ZnCl₂ und CdCl₂. In einer bevorzugten Auführungsform der Erfindung werden wasserlösliche Polymere dem Fällmediums (F) hinzugegeben. Gängige wasserlösliche Polymere sind Poly(ethylen glycole), Poly(propylen glykole), Poly(propylen ethylen glykole), Poly(vinyl pyrrolidine), Poly(vinyl alkohole) und sulfonierte Polystyrole.

Das Fällmediums (F) kann zudem die in Lösungen üblichen Additive und Zusätze erhalten. Beispiele sind u.a. Verlaufshilfsmittel, oberflächenaktive Substanzen, Haftvermittler, Lichtschutzmittel wie UV-Absorber und/oder Radikalfänger.

Der Großteil der Additive ist nach der Herstellung in der Membran nicht mehr enthalten. Additive, die in der Membran (M) nach der Herstellung verbleiben, können die Membran (M) hydrophiler machen.

Dabei können auch Gemische unterschiedlicher Additive in das Fällmedium (F) mit eingearbeitet werden. So wird in einer besonders bevorzugten Ausführungsform der Erfindung 0,3 bis 0,8 Gew.-% Dodecylsulfat und 0,3 bis 0,8 Gew.-% LiF zum Fällungsbad hinzugegeben.

Die Konzentration der Additive in dem Fällmedium (F) beträgt vorzugsweise mindestens 0,01 Gew.-%, besonders bevorzugt mindestens 0,1 Gew.-%, insbesondere mindestens 1 Gew.-% und vorzugsweise höchstens 30 Gew.-%, besonders bevorzugt höchstens 15 Gew.-%, insbesondere höchstens 5 Gew.-%.

Zur Erzeugung der jeweils gewünschten Eigenschaftsprofile der Membranen (M) sind derartige Zusätze bevorzugt.

Die Geschwindigkeit mit der der Polymerfilm bzw. die Hohlfaser in das Fällmedium (F) eintaucht, muss grundsätzlich so gewählt werden, dass der für die Membranherstellung notwendige Lösemittelaustausch stattfinden kann. Typische Eintauchgeschwindigkeiten sind vorzugsweise mindestens 1 cm/s, besonders bevorzugt mindestens 2 cm/s, insbesondere mindestens 5 cm/s, besser mindestens 10 cm/s und vorzugsweise höchstens 1 m/s, besonders bevorzugt höchstens 50 cm/s, insbesondere höchstens 30 cm/s.

Die Geschwindigkeit wird bevorzugt so eingestellt, dass die Membranen (M) kontinuierlich hergestellt werden. Bei einem derartigen Verfahren erfolgt die Erzeugung des nassen Polymerfilms bevorzugt mit der gleichen Geschwindigkeit wie das Eintauchen in das Inversionsbad. Die Zeit zwischen der Polymerfilmherstellung und dem Eintauchen in das Fällmedium (F) wird dabei so eingestellt, dass der Polymerfilm die evtl. notwendige Zeit für eine Vortrocknung durchläuft.

Der Winkel in dem der Polymerfilm bzw. die Hohlfaser in das Fällmedium (F) getaucht wird, muss grundsätzlich so gewählt werden, dass der Lösemittelaustausch nicht blockiert wird. Typische Winkel liegen sind vorzugsweise mindestens 1 °, besonders bevorzugt mindestens 10 °, insbesondere mindestens 15 ° und vorzugsweise höchstens 90 °, besonders bevorzugt höchstens 70 °, insbesondere höchstens 45 °. Hohlfasern werden bevorzugt in einem Winkel von 85° bis 90 °in das Fällmedium (F) getaucht.

Die zeitliche Länge des Auslagerns des Films im Fällmedium (F) muss grundsätzlich so gewählt werden, dass genügend Zeit vorhanden ist, bis der Lösemittelaustausch stattgefunden hat. Typische Zeiten sind dabei vorzugsweise mindestens 10 s, besonders bevorzugt mindestens 30 s, insbesondere mindestens 1 min und vorzugsweise höchstens 20 h, besonders bevorzugt höchstens 60 min, insbesondere höchstens 30 min. In einer besonders bevorzugten Ausführungsform der Membranen (M) wird eine Auslagerungszeit von 3 bis 7 min verwendet.

Enthalten Membranen (M) nach dem Herstellungsprozess noch unerwünschte Reste von wässrigen oder organischen Lösungsmitteln aus Lösugsmittel (L) oder Fällmedium (F), so werden die entsprechenden Lösungsmitteln nach der Herstellung der Membranen (M) entfernt. Die Entfernung des Lösungsmittels erfolgt dabei bevorzugt durch Abdampfen des Lösungsmittels. Nach der Auslagerung im Fällmedium (F) kann die Membran (M) entweder direkt verwendet werden oder einer weiteren Nachbehandlung ausgesetzt werden. Die Nachbehandlung dient dazu die Stabilität bzw. die Eigenschaften der Membran (M) für die jeweilige Trenn-Anwendung zu optimieren. Typische Methoden sind dabei thermische Behandlung, Bestrahlung und Oberflächenmodifikation der Membranen (M). Die thermische Behandlung kann dabei an Luft, in einer nicht oxidierenden Umgebung oder in einem Lösemittel, z. B. Wasser, stattfinden. Als Strahlenquellen für die Behandlung der Membranen (M) kommen dabei z.B. Gamma-, Röntgen-, Mikrowellen- sowie aktinische Strahlung vor. Die Strahlendosis ist dabei immer speziell auf die gewünschte Eigenschaftsmodifikation hin einzustellen.

In einer bevorzugten Ausführungsform der Erfindung werden die hergestellten Membranen (M) bei 50°C für 10 h an Luft getrocknet.

In einer bevorzugten Ausführungsform der Erfindung werden die hergestellten Membranen (M) in einem Medium eingelegt. Damit wird ein mögliches Kollabieren der Porenstruktur verhindert. In einer besonders bevorzugten bevorzugten Ausführungsform der Erfindung werden die hergestellten Membranen (M) in Glykol eingelegt. In einer ebenfalls bevorzugten Ausführungsform der Erfindung werden die hergestellten Membranen (M) mit Gammastrahlung behandelt, was zu einer weiteren Vernetzung der Organopolysiloxan/Polyharnstoff/Polyurethan/Polyamid/Polyoxalyl diamin Copolymere führt. Damit wird die Stabilität der Membranen (M) in aggressiven Umgebungen verbessert.

Eine weitere typische Methode, die Membranen (M) zu modifizieren bzw. zu funktionalisieren, ist die Behandlung der Membranen (M) mit Hoch- oder Niederdruck Plasma.

Durch die Auslagerung der Membranen (M) in ein Plasma können die Membranen z.B. nachträglich sterilisiert, gereinigt oder mit Masken geätzt werden.

Weiterhin bevorzugt ist ebenfalls die Modifizierung der Membranoberflächeneigenschaften. Dabei kann, je nach eingesetztem Plasmaverfahren, die Oberfläche hydrophobisiert oder hydrophilisiert werden.

Die nach dem Phaseninversionsprozess hergestellten Flach- und Hohlfaser-Membranen (M) weisen eine Schichtdicke von vorzugsweise mindestens 0,1 µm, besonders bevorzugt mindestens 1 µm, insbesondere mindestens 10 µm, besser mindestens 50 µm und vorzugsweise höchstens 2000 µm, besonders bevorzugt höchstens 1000 µm, insbesondere höchstens 500 µm, besser höchstens 250 µm auf. In einer besonders bevorzugten Ausführungsform der Erfindung beträgt die Schichtdicke der Membran (M) 50 bis 80 µm.

Die Membranen (M) weisen nach der Herstellung eine poröse Struktur auf. Das freie Volumen beträgt dabei je nach Wahl der Herstellungsparameter mindestens 5 Vol.-% und maximal bis 99 Vol.-%, bezogen auf die Dichte des reinen Copolymers der allgemeinen Formel (1) auf. Bevorzugt sind Membranen (M) mit einem freien Volumen von mindestens 20 Vol.-%, besonders bevorzugt mindestens 30 Vol.-%, insbesondere mindestens 35 Vol.-% und vorzugsweise höchstens 90 Vol.-%, besonders bevorzugt höchstens 80 Vol.-%, insbesondere höchstens 75 Vol.-%.

Die Membranen (M) besitzen grundsätzlich einen anisotropen Aufbau. Einer kompakteren Deckschicht schließt sich ein immer poröser werdendes Polymergerüst an. Gerade diese Struktur ist bei Organopolysiloxan/Polyharnstoff/Polyurethan/Polyamid/Polyoxalyldiamin Copolymeren der allgemeinen Formel (1) neu und so nicht zu erwarten.

Die selektive Deckschicht kann dabei geschlossen sein, d.h. es sind keine Poren > 1000 Å vorhanden, was als Verwendung als Gastrennungsmembran, mit einer Porengröße kleiner als 100 Å, als Membran für Nanofiltration, mit einer Porengröße kleiner als 20 Å, als Membran für Reverse Osmose, mit einer Porengröße kleiner 10 Å, oder als Membran für Pervaporation notwendig ist. Bei geschlossenen, trennselektiven Schichten beträgt die Dicke vorzugsweise mindestens 10 nm, besonders bevorzugt mindestens 100 nm, insbesondere mindestens 500 nm und vorzugsweise höchstens 200 µm, besonders bevorzugt höchstens 100 µm, insbesondere höchstens 20 µm.

Eventuell vorhandene Fehlstellen, die die Trennleistung der Membranen (M) negativ beeinflussen könnte, können durch einen sogenannten Top-Coat verschlossen werden. Bevorzugte Polymere besitzen dabei eine hohe Gasdurchlässigkeit. Besonders bevorzugte Polymere sind dabei Polydimethylsiloxane. Eine weitere Möglichkeit Fehlstellen auf der Oberfläche zu verschließen besteht durch eine thermische Behandlung der Oberflächen. Das Polymer auf der Oberfläche schmilzt auf und verschließt so die Fehlstellen.

Ein weiterer Gegenstand der Erfindung ist die Anwendung der porösen Membranen (M) für die Trennung von Stoffgemischen. Typische Zusammensetzungen, der zu trennenden Gemische schließen fest-fest, flüssig-flüssig, gasförmig-gasförmig, fest-flüssig, fest-gasförmig sowie flüssig-gasförmig Gemische mit ein. Auch tertiäre Gemische können mit den Membranen (M) aufgetrennt werden.

Bevorzugt werden mit den Membranen (M) gasförmig-gasförmig, flüssig-fest sowie flüssig-flüssig Gemische aufgetrennt. Die Trennung erfolgt dabei bevorzugt in einem einstufigen Prozess oder in sog. Hybridprozessen, d.h. zwei oder mehr hintereinander geschaltete Trennschritte. Beispielsweise werden flüssig-flüssig-Stoffgemische erst destillativ aufgereinigt und im Anschluss daran mit Hilfe der porösen Membranen (M) weiter getrennt.

Die Membranen (M) können in allen Membranverfahren eingesetzt werden. Typische Membranverfahren sind z.B. Reverse Osmose, Gastrennung, Pervaporation, Nanofiltration, Ultrafiltration und Mikrofiltration.

Die Membranen (M) werden dabei durch die Auswahl der passenden Produktionsparameter so hergestellt, dass die für die jeweilige Applikation notwendige Porenstruktur entsteht. Eine Zusammenstellung der ungefähren Porendurchmesser für die jeweilige Applikation wird in Tabelle 1 gegeben.

**Tabelle 1 Übersicht über die für die jeweilige Membranapplikation typischen Porendurchmesser**

| Applikation | Porendurchmesser /Å |
|---|---|
| Reverse Osmose | 1 - 10 |
| Gastrennung | 1 - 10 |
| Pervaporation | 1 - 10 |
| Nanofiltration | 5 - 20 |
| Ultrafiltration | 20 - 1000 |
| Mikrofiltration | > 500 |

In einer bevorzugten Ausführungsform der Erfindung werden Membranen (M) mit einer geschlossenen, selektiven Schicht erhalten, d.h. die Porengrößen sind bevorzugt in einem Bereich von 1 - 10 Å, die sich in für die Trennung von Gasgemischen besonders bevorzugt eignen. Durch den anisotropen Aufbau der Membranen (M) kann der Fluss und damit verbunden die Leistung gegenüber kompakten, nicht porösen Siliconmembranen deutlich gesteigert werden. Für die Trennung der Gasgemische sind damit deutlich geringe Energiemengen notwendig. Darüber hinaus ist die Herstellung der Membranen (M) gegenüber dem derzeitigen Stand der Technik deutlich einfacher. Auf komplizierte mehrschichtige Kompositmembranen mit einen Substrat und einer weiteren Beschichtung kann verzichtet werden. Die Membranen (M) lassen sich so deutlich schneller und günstiger produzieren, was für den technischen Einsatz derartiger Membranen (M) zwingend notwendig ist.

Darüber hinaus weisen die porösen Membranen (M) aus Organopolysiloxan/Polyharnstoff/Polyurethan/Polyamid/Polyoxalyl diamin Copolymeren der allgemeinen Formel (1) günstige Selektivitäten hinsichtlich der Gasgemische CH₄/CO₂, CH₄/H₂S, CH₄/CnH₂n+2 und CH₄/H₂O auf, was für ihren möglichen Einsatz als Membran für die Reinigung von Erdgas von zentraler Bedeutung ist.

Weitere typische gasförmig-gasförmig Gemischen, die mit den Membranen (M) getrennt werden können, sind z.B.

O₂/N₂, Luft, H₂/N₂, H₂O-Dampf/Luft, H₂/CO, H₂/CO₂, CO/CO₂, H₂/CH₄, gasförmige organische Verbindungen/Luft oder gasförmige organische Verbindungen/N₂.

Für die Abtrennung von flüchtigen, organischen Verunreinigungen, engl. sog. volatile organic compounds (Abk. VOC), in Abwässern weisen die Membranen (M) ebenfalls günstige Trenneigenschaften auf. Die Membranen (M) werden dabei in sogenannten Pervaporationsanlagen verwendet. Typische Verunreinigungen, die mit den Membranen (M) von den Abwässern abgetrennt werden können, sind z.B. Benzol, Aceton, Isopropanol, Ethanol, Methanol, Xylene, Toluol, Vinylchlorid, Hexan, Aniline, Butanol, Acetaldehyd, Ethylenglykol, DMF, DMAC, Methyl-ethyl-ketone sowie Methyl-isobutyl-keton.

In einer weiteren bevorzugten Ausführungsform der Erfindung weist die Membran (M) Poren in einem Bereich von 1 nm bis 100 nm auf. Diese Strukturen eignen sich für die Herstellung von Ultrafiltrationsmembranen. Typische Anwendungen der Ultrafiltrationsmembranen (M) sind die Aufreinigung von Elektrotauchlack in der Automobilindustrie, Proteinaufreinigung in der Lebensmittelindustrie, z.B. bei der Produktion von Käse oder Klärung von Fruchtsäften, Reinigung von Öl-Wasser-Emulsionen, z.B. für die Kühlung und das Schmieren von Werkstücken, sowie die industrielle Wasseraufreinigung von Abwässern mit partikelförmigen Verunreinigungen, z.B. Latexrückstände im Abwasser.

In einer weiteren bevorzugten Ausführungsform der Erfindung weist die Membran (M) Poren in einem Bereich von 100 nm bis 10 µm auf. Diese Membranen (M) eignen sich besonders bevorzugt für die Verwendung in Mikrofiltrationsanlagen.

Typische Anwendungen der Mikrofiltrationsmembranen (M) sind z.B. die Entfernung von Bakterien oder Viren aus Wasser, die sterile Filtration von pharmazeutischen Produkten, der Sterilisation von Wein und Bier sowie die Herstellung von partikelfreiem Reinstwasser für die Elektroindustrie.

In einer weiteren bevorzugten Ausführungsform der Erfindung werden die porösen Membranen (M) mit einem zusätzlichen Polymer auf der Oberfläche beschichtet.

Bei der zusätzlichen Polymerbeschichtung handelt es sich bevorzugt um einen kompakten Film.

Die Dicke der zusätzlichen Schicht richtet sich dabei nach der anvisierten Applikation der Endmembran. Die Dicken der Beschichtungen liegen in einem Bereich von vorzugsweise mindestens 10 nm, besonders bevorzugt mindestens 100 nm, insbesondere mindestens 500 nm und vorzugsweise höchstens 500 µm, besonders bevorzugt höchstens 50 µm, insbesondere höchstens 10 µm.

Als Materialien für die Beschichtung eignen sich alle zu Filmen verarbeitbare Polymere. Beispiele für typische Polymere sind Polyamide, Polyimide, Polyetherimide, Polycarbonate, Polybenzimidazole, Polyethersulfone, Polyester, Polysulfone, Polytetrafluorethylene, Polyurethane, Silicone, Polydimethylsilicone, Polymethylphenylsilicone, Polymethyloctylsilicone, Polymethylalkylsilicone, Polymethylarylsilicone, Polyvinylchloride, Polyetherglykole, Polyethylenterephthalat (PET), Polyaryletherketone, Polyacrylnitril, Polymethylmethacrylate, Polyphenylenoxide, Polycarbonate, Polyethylene, Polypropylene und deren möglichen Copolymere.

Die Polymere können dabei mit üblichen Methoden auf die Membranen (M) aufgebracht werden. Beispiele für gängige Beschichtungsverfahren sind Laminieren, Sprühen, Rakeln oder Kleben. Die Membran (M) muss dabei eine Oberflächenstruktur aufweisen, die es ermöglicht, dass kompakte und dicht geschlossene Filme aufgebracht werden können. Dies kann unter anderem durch die Porenstruktur der Membran (M) eingestellt werden. In einer bevorzugten Ausführungsform der Erfindung wird die zusätzliche Beschichtung auf Membranen (M) mit Poren in einem Bereich von 10 nm - 5 µm aufgebracht. In einer besonders bevorzugten Ausführungsform der Erfindung wird die zusätzliche Beschichtung auf Membranen (M) mit Poren in einem Bereich von 100 nm - 1 µm aufgebracht.

Durch die hohe Durchlässigkeit und der guten Filmbildung auf der Oberfläche der Membranen (M) können Membranen (M) mit insgesamt besserer Leistung erzielt werden. Dabei kann sowohl der Membranfluss als auch die Selektivität der Membranen (M) weiter verbessert werden.

Eine weitere Applikation der Membranen (M) ist die Barrierewirkung gegenüber flüssigem Wasser bei gleichzeitiger Wasserdampfdurchlässigkeit. Die Membranen (M) können dabei z.B. in Kleidungsstücke, wie z.B. Jacken, eingearbeitet werden.

Weitere Beispiele von Anwendungen der Membranen (M) finden sich unter anderem in Membrane Technology and Applications, second Edition, R. W. Baker, New York, Wiley, 2004.

Durch den anisotropen Aufbau der Membranen (M) werden die mechanischen Eigenschaften der Filme deutlich verbessert. So ist bei Membranen des Stands der Technik bekannt, dass Druckschwankungen der Feed-Ströme zu einem Reißen der Membranen und damit zu einem Ausfall der Membranen, führen können. Gerade dünne Membranen sind in dieser Hinsicht sehr anfällig. So weisen kompakte Siliconmembranen mit vergleichbaren Durchflüssen wie die Membranen (M) Schichtdicken von ca. 1 µm bis 10 µm auf. Diese Filme sind mechanisch so instabil, dass diese nur durch komplizierte Methoden, z.B. durch das Aufbringen eines dünnen kompakten Siliconfilms auf einer stillen Wasseroberfläche, überhaupt weiterverarbeiten lassen. Der Aufbau von komplizierten mehrschichtigen Kompositmembranen ist dabei zwingend notwendig. Darüber hinaus besteht durch das Laminieren die Gefahr des Ablösens der Siliconschicht vom Substrat.

Auf dererlei Hilfskonstruktionen kann bei den Membranen (M) verzichtet werden, da die Membranen neben der kompakten und dünnen selektiven Schicht eine poröse Unterstruktur aufweisen, die den Membranen (M) eine ausreichende mechanische Stabilität verleiht. Die Membranen (M) lassen sich leicht verarbeiten und lassen sich auch ohne eine zusätzliche poröse Trägerstruktur weiterverarbeiten. Falls es sich für spezifische Trennanwendungen als günstig erweist, können die Membranen (M) ebenfalls auf poröse Strukturen aufgebracht werden. Dies kann entweder direkt auf dem Träger erfolgen, d.h. der Polymerfilm wird auf dem Substrat aufgebracht und so in das Fällmedium (F) getaucht, oder die Membran (M) wird hergestellt und in einem weiteren Schritt auf die Trägerstruktur laminiert. Gegebenenfalls können Haftvermittler eingesetzt werden um die Haftung der Membranen (M) auf den Trägerstrukturen weiter zu verbessern.

Die Membranen (M) können problemlos in Membranmodulen verbaut werden. Grundsätzlich ist dabei der Aufbau von Hohlfasermodulen, spiralgewundenen Wickelmodulen, Platten-Modulen, Cross-Flow-Modulen oder Dead-end-Modulen, je nach Form der Membran (M) als Flach- bzw. Hohlfasermembran, möglich.

Die Membranen (M) lassen sich dabei leicht in die Abläufe der derzeit üblichen Verfahren sowie mit den Komponenten, die neben der Membran für den Aufbau der Module nötig sind, integrieren.

Alle vorstehenden Symbole der vorstehenden Formeln weisen ihre Bedeutungen jeweils unabhängig voneinander auf. In allen Formeln ist das Siliziumatom vierwertig.

Soweit nicht anders angegeben sind alle Mengen- und Prozentangaben auf das Gewicht bezogen, alle Drücke 0,10 MPa (abs.) und alle Temperaturen 20 °C.

### Beispiel 1 Herstellung einer Rakellösung

Zu einer Lösung von 3,85 g Isopropanol werden unter Rühren 2,3 g eines Organopolysiloxan-Polyurethan Copolymeres (Geniomer® 200, Wacker Chemie AG) gegeben. Im Anschluss daran werden weitere 3,85 g NMP (N-Methyl-pyrrolidon) zur Mischung hinzugegeben und der gesamte Ansatz 16 h bei Raumtemperatur auf einem Vertikalschüttler gelöst.

Man erhält eine farblose, viskose Lösung mit einem Feststoffgehalt von 23 Gew.-%.

### Beispiel 2 Herstellung einer Rakellösung

Zu einer Lösung von 3,85 g Isopropanol werden unter Rühren 2,3 g eines Organopolysiloxan-Polyurethan Copolymeres (Geniomer® 200, Wacker Chemie AG) gegeben. Im Anschluss daran werden weitere 1,9 g NMP (N-Methyl-pyrrolidon) und 1,9 g DEEA (Diethylaminoethanol) zur Mischung hinzugegeben und der gesamte Ansatz 16 h bei Raumtemperatur auf einem Vertikalschüttler gelöst.

Man erhält eine farblose, viskose Lösung mit einem Feststoffgehalt von 23 Gew.-%.

### Beispiel 3 Herstellung einer Rakellösung

Zu einer Lösung von 4,15 g Isopropanol werden unter Rühren 1,7 g eines Organopolysiloxan-Polyurethan Copolymeres (Geniomer® 200, Wacker Chemie AG) gegeben. Im Anschluss daran werden weitere 2,08 g NMP (N-Methyl-pyrrolidon) und 2,08 g DEEA (Diethylaminoethanol) zur Mischung hinzugegeben und der gesamte Ansatz 16 h bei Raumtemperatur auf einem Vertikalschüttler gelöst.

Man erhält eine farblose, viskose Lösung mit einem Feststoffgehalt von 17 Gew.-%.

### Beispiel 4 Herstellung einer Membran aus der in Beispiel 1 hergestellten Rakellösung.

Für die Herstellung einer Membran aus der in Beispiel 1 hergestellten Rakellösung wurde ein Rakelziehgerätes (Coatmaster 509 MC-I, Erichson) eingesetzt

Als Filmziehrahmen wurde ein Kammerrakel mit einer Filmbreite von 11 cm und einer Spalthöhe von 300 µm verwendet.

Die als Substrat eingesetzte Glasplatte wurde mit Hilfe einer Vakuumsaugplatte fixiert. Die Glasplatte wurde vor dem Rakelauftrag mit einem in Ethanol getränktem Reinraumtuch abgewischt. Auf diese Weise wurden evtl. vorhandene Partikelverunreinigungen entfernt.

Im Anschluss daran wurde der Filmziehrahmen mit der Lösung befüllt und mit einer konstanten Filmziehgeschwindigkeit von 25 mm/s über die Glasplatte gezogen.

Danach wurde der noch flüssige Nassfilm in das mit Wasser gefüllte Inversionsbecken getaucht. Der Lösemittelaustausch und das gleichmäßige Ausfallen des Polymers kann dabei optisch durch die Trübung des Films beobachtet werden. Die Zeit für die Phaseninversion beträgt dabei ca. 1 min.

Die Membran wurde nach insgesamt 25 min aus dem Becken genommen und an Luft getrocknet. Dabei konnte die Membran problemlos vom Substrat abgelöst werden.

Man erhält eine ca. 80 µm dicke, undurchsichtige Membran. Im Rasterelektronenmikroskop ist die anisotrope Struktur der Membran deutlich zu erkennen. An die kompakte, trennselektive Deckschicht schließt eine offenporige und poröse Unterstruktur an.

Die Gesamtporosität der so hergestellten Membran beträgt 40 Vol.-%.

### Beispiel 5 Herstellung einer Membran aus der in Beispiel 2 hergestellten Rakellösung.

Eine Membran wurde analog zu Beispiel 4 aus der Rakellösung aus Beispiel 2 hergestellt.

Wie in Beispiel 4 wurde eine 70 µm dicke Membran erhalten, die eine geschlossene, kompakte Deckschicht und einen porösen Unterbau aufweist.

Die Gesamtporosität der so hergestellten Membran beträgt 30 Vol.-%.

### Beispiel 6 Herstellung einer Membran aus der in Beispiel 3 hergestellten Rakellösung.

Aus der in Beispiel 3 hergestellten Lösung wurde analog zu Beispiel 4 eine Membran angefertigt.

Im Gegensatz zu den Membranen aus Beispiel 4 und 5 weist die hier hergestellte Membran eine offenporige Deckschicht auf. Der durchschnittliche Porendurchmesser der trennselektiven Schicht beträgt 0,2 µm. Die Gesamtporosität der Membran beträgt ca. 30 Vol.-%.

### Beispiel 7 Herstellung einer Membran auf einem Polyester-Vliesstoff.

Analog zu Beispiel 4 wurde eine Membran gefertigt. Dabei wurde allerdings als Substrat ein Polyestervlies (Novatexx®, 2415N, Freudenberg) eingesetzt.

Man erhält eine poröse Membran, die fest mit dem Vliesstoff verbunden ist und nicht mehr zerstörungsfrei von dem Träger entfernt werden kann.

### Beispiel 8 (nicht erfindungsgemässes Vergleichsbeispiel) Herstellung kompakter Filme ohne Porosität

Für die Herstellung von kompakten Filmen wurden 8,0 g des Organopolysiloxan-Polyurethan Copolymeres (Geniomer® 200, Wacker Chemie AG) in 32 g Isopropanol gelöst.

Für die Herstellung des Films wurde ein Rakelziehgerät (Coatmaster 509 MC-I, Erichson) eingesetzt Als Filmziehrahmen wurde ein Kammerrakel mit einer Filmbreite von 11 cm und einer Spalthöhe von 300 µm verwendet.

Die als Substrat eingesetzte Glasplatte wurde mit Hilfe einer Vakuumsaugplatte fixiert. Die Glasplatte wurde vor dem Rakelauftrag mit einem in Ethanol getränktem Reinraumtuch abgewischt. Auf diese Weise wurden evtl. vorhandene Partikelverunreinigungen entfernt.

Im Anschluss daran wurde der Filmziehrahmen mit der hergestellten Lösung befüllt und mit einer konstanten Filmziehgeschwindigkeit von 25 mm/s über die Glasplatte gezogen.

Danach wurde der Nassfilm bei 60 °C getrocknet. Man erhielt einen transparenten Film mit einer Schichtdicke von 30 µm.

### Austestung der in den Beispielen 4, 5 und 8 hergestellten Membranen und Filme

Gas-Transporteigenschaften

Die unterschiedlichen Proben wurden mit dem

Gasdurchlässigkeitsprüfgerät GPC (Brugger) im Hinblick auf ihre unterschiedlichen Gasdurchlässigkeiten von N₂ und O₂ untersucht. Die Ergebnisse der untersuchten Proben sind in Tabelle 2 zusammengefasst. Die Messungen wurden bei einem konstanten Gasfluss von 100 cm³/min und einer konstanten Messtemperatur von 20 °C durchgeführt.

**Tabelle 2 Zusammenfassung der untersuchten Membranen**

| Probe | N₂-Permeabilität | O₂-Permeabilität | N₂/O₂-Selektivität |
|---|---|---|---|
| Bsp. 4 | 1700 | 770 | 2,2 |
| Bsp. 5 | 2100 | 950 | 2,2 |
| Bsp. 8 * | 550 | 250 | 2,2 |

| | | | |
|---|---|---|---|
| Einheiten: Barrer * = nicht erfindungsgemäß | | | |

Anhand der Tabelle 2 wird klar ersichtlich, dass die Permeabilitäten durch den anisotropen, porösen Aufbau der erfindungsgemäßen Membranen aus den Beispielen 4 und 5 im Vergleich zu dem aus Vollmaterial hergestelltem Film aus Beispiel 8 deutlich höher sind. Dabei bleibt aber die N₂/O₂-Selektivität gleich hoch.

Diese Eigenschaften machen die erfindungsgemäßen Membranen deutlich effizienter als Membranen des Stands der Technik.

### Mechanische Untersuchungen der Membranen und Filme aus den Beispielen 4, 5 und 8.

Die Zugversuche wurden nach EN ISO 527-3 durchgeführt.

Für die Untersuchung der mechanischen Eigenschaften wurden aus den hergestellten Membranen und Filmen jeweils drei rechteckige Probenkörper (6 cm * 1cm) ausgestanzt.

Die so hergestellten Prüfkörper wurden mit einer Geschwindigkeit von 0,5 cm/s auseinandergezogen. Aus den bestimmten Spannungsdehnungskurven wurden das E-Modul und die Reißspannung ermittelt.

Bezogen auf das Probengewicht der Filme wiesen die erfindungsgemäßen Membranen der Beispiele 4 und 5 ein deutlich gesteigertes E-Modul und eine höhere Reißspannung auf als das Vergleichsbeispiel 8.

Damit sind die porösen Membranen deutlich stabiler und mechanisch stärker belastbar als die aus Vollmaterial hergestellten Membranen.

Anhand der aufgeführten Beispiele wird klar ersichtlich, dass poröse Membranen aus Organopolysiloxan/Polyharnstoff/Polyurethan/Polyamid/Polyoxalyldiamin Copolymeren Eigenschaftsprofile erzielen, die den Stand der Technik deutlich übertreffen.

## Patentansprüche

1. Poröse Membranen (M), enthaltend Organopolysiloxan/- Polyharnstoff/Polyurethan/Polyamid/Polyoxalyldiamin Copolymere der allgemeinen Formel (1): 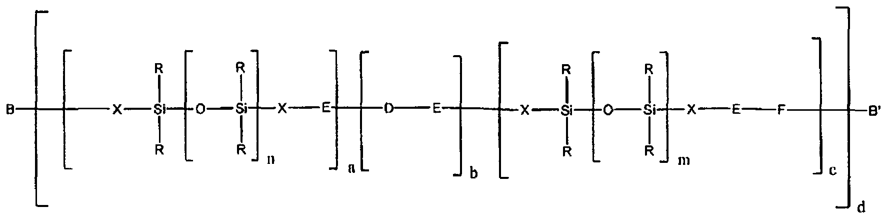 wobei das Strukturelement E ausgewählt wird aus den allgemeinen Formeln (2a -f) 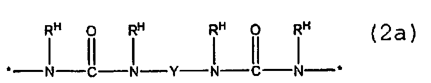 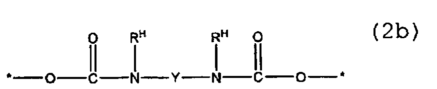 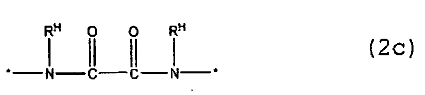 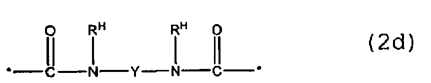 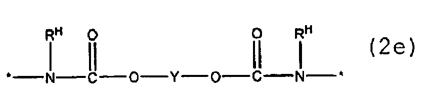 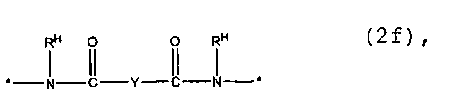 wobei das Strukturelement F ausgewählt wird aus den allgemeinen Formeln (3a -f) 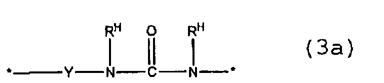 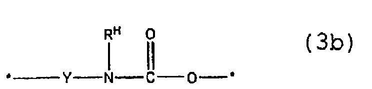 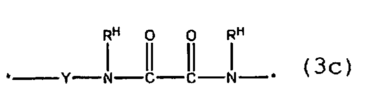 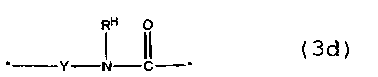 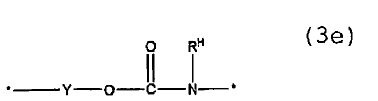 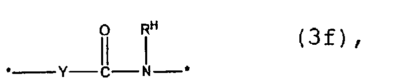 wobei
R einen ,einwertigen, gegebenenfalls durch Fluor oder Chlor substituierten Kohlenwasserstoffrest mit 1 bis 20 Kohlenstoffatomen,
R^{H} Wasserstoff, einen einwertigen, gegebenenfalls durch Fluor oder Chlor substituierten Kohlenwasserstoffrest mit 1 bis 22 Kohlenstoffatomen,
X einen Alkylen-Rest mit 1 bis 20 Kohlenstoffatomen, in dem einander nicht benachbarte Methyleneinheiten durch Gruppen -O- ersetzt sein können, oder einen Arylenrest mit 6 bis 22 Kohlenstoffatomen,
**Y** einen zweiwertigen, gegebenenfalls durch Fluor oder Chlor substituierten Kohlenwasserstoffrest mit 1 bis 20 Kohlenstoffatomen,
**D** einen gegebenenfalls durch Fluor, Chlor, C₁-C₆-Alkyl- oder C₁-C₆-Alkylester substituierten Alkylenrest mit 1 bis 700 Kohlenstoffatomen, in dem einander nicht benachbarte Methyleneinheiten durch Gruppen -O-, -COO-, -OCO-, oder -OCOO-, ersetzt sein können, oder Arylenrest mit 6 bis 22 Kohlenstoffatomen,
**B, B'** eine reaktive oder nicht reaktive Endgruppe, welche kovalent an das Polymer gebunden ist,
**m** eine ganze Zahl von 1 bis 4000,
**n** eine ganze Zahl von 1 bis 4000,
**a** eine ganze Zahl von mindestens 1,
**b** eine ganze Zahl von 0 bis 40,
**c** eine ganze Zahl von 0 bis 30 und
**d** eine ganze Zahl größer 0 bedeuten,
mit der Massgabe, dass mindestens 10% der Reste **R^{H}** Wasserstoff bedeuten.

2. Poröse Membranen (M) nach Anspruch 1, bei denen **R** einen einwertigen nicht substituierten Kohlenwasserstoffrest mit 1 bis 6 Kohlenstoffatomen bedeutet.

3. Poröse Membranen (M) nach Anspruch 1 oder 2, bei denen **a** eine Zahl von höchstens 50 bedeutet.

4. Poröse Membranen (M) nach Anspruch 1 bis 3, bei denen n eine Zahl von 15 bis 400 bedeutet.

5. Verfahren zur Herstellung der porösen Membranen (M) gemäss Anspruch 1 bis 4, aus Organopolysiloxan/Polyharnstoff/Polyurethan/Polyamid/Polyoxalyldiamin Copolymeren der vorstehenden allgemeinen Formel (1) nach dem Phaseninversionsprozess, bei dem aus einer Lösung von Organopolysiloxan/Polyharnstoff/Polyurethan/Polyamid/- Polyoxalyldiamin Copolymeren in Lösungsmittel (L) ein Film hergestellt wird und der Lösungsmittel (L) enthaltende Film mit einem Fällmedium (F) in Kontakt gebracht wird.

6. Verfahren nach Anspruch 5, bei dem aus dem Lösungsmittel (L) enthaltenden Film Lösungsmittel (L) und Fällmedium (F) durch Verdampfen entfernt werden.

7. Verfahren nach Anspruch 5 oder 6, bei dem der noch Lösungsmittel (L) enthaltende Polymerfilm in ein mit Fällmedium (F) gefülltes Fällungsbad getaucht wird.

8. Verfahren nach Anspruch 5 bis 7, bei dem sich das Lösungsmittel (L) oder Lösungsmittelgemisch (L), welches für die Herstellung der Polymerlösung verwendet wurde, in dem Fällmedium (F) löst.

9. Verwendung der porösen Membranen (M) gemäss Anspruch 1 bis 4 und der gemäss Anspruch 5 bis 8 hergestellten porösen Membranen (M) für die Trennung von Stoffgemischen.

## Claims

1. Porous membranes (M) comprising organopolysiloxane/polyurea/polyurethane/polyamide/polyoxalyldiamine copolymers of the general formula (1): 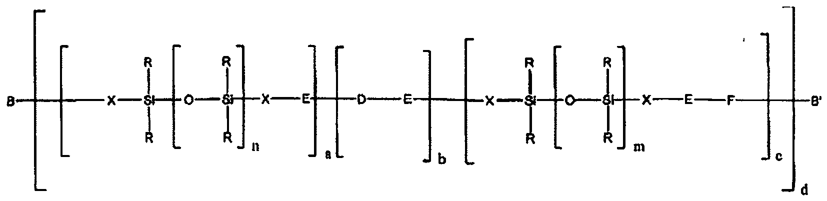 where the structural element **E** is selected from the general formulae (2a - f) 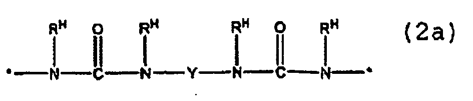 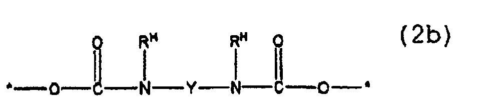 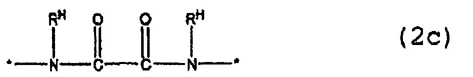 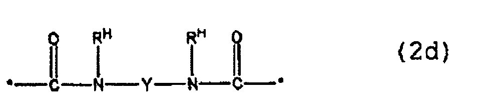 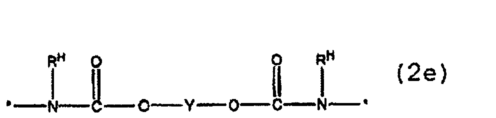 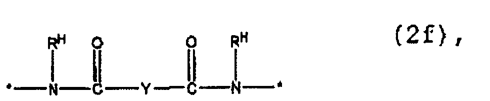 where the structural element **F** is selected from the general formulae (3a - f) 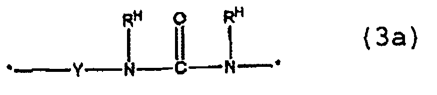 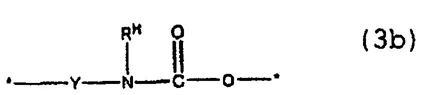 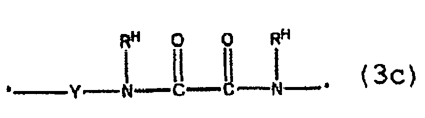 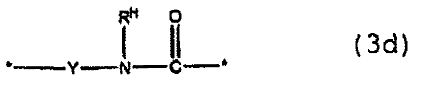 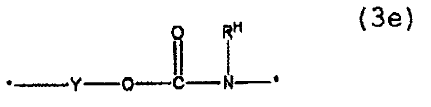 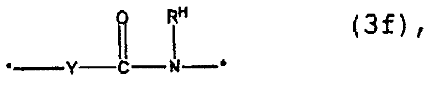 where
**R** is a monovalent, optionally fluorine- or chlorine-substituted hydrocarbon radical having 1 to 20 carbon atoms,
**R^{H}** is hydrogen or a monovalent, optionally fluorine- or chlorine-substituted hydrocarbon radical having 1 to 22 carbon atoms,
**X** is an alkylene radical having 1 to 20 carbon atoms, in which nonadjacent methylene units may be replaced by groups -O-, or is an arylene radical having 6 to 22 carbon atoms,
**Y** is a divalent, optionally fluorine- or chlorine-substituted hydrocarbon radical having 1 to 20 carbon atoms,
**D** is an optionally fluorine-, chlorine-, C₁- C₆-alkyl- or C₁-C₆-alkyl ester- substituted alkylene radical having 1 to 700 carbon atoms, in which nonadjacent methylene units may be replaced by groups -O-, -COO-, -OCO- or -OCOO-, or is an arylene radical having 6 to 22 carbon atoms,
**B** and **B'** are each a reactive or nonreactive end group which is bonded covalently to the polymer,
**m** is an integer from 1 to 4000,
**n** is an integer from 1 to 4000,
**a** is an integer of at least 1,
**b** is an integer from 0 to 40,
**c** is an integer from 0 to 30, and
**d** is an integer greater than 0,
with the proviso that at least 10% of the
radials **R^{H}** are hydrogen.

2. Porous membranes (M) according to Claim 1, wherein **R** denotes a monovalent unsubstituted hydrocarbon radical having 1 to 6 carbon atoms.

3. Porous membranes (M) according to Claim 1 or 2, wherein **a** denotes a number of not more than 50.

4. Porous membranes (M) according to Claim 1 to 3, wherein **n** denotes a number from 15 to 400.

5. Process for preparing the porous membranes (M) according to Claim 1 to 4, from organopolysiloxane/ polyurea/polyurethane/polyamide/polyoxalyldiamine copolymers of the above general formula (1), by the phase inversion process, wherein, from a solution of organopolysiloxane/polyurea/polyurethane/polyamide / polyoxalyldiamine copolymers in solvent (L), a film is produced and the solvent (L)-comprising film is contacted with a precipitating medium (F).

6. Process according to Claim 5, wherein solvent (L) and precipitating medium (F) are removed from the solvent (L)-comprising film by evaporation.

7. Process according to Claim 5 or 6, wherein the still solvent (L)-comprising polymer film is immersed into a precipitation bath filled with precipitating medium (F).

8. Process according to Claim 5 to 7, wherein the solvent (L) or solvent mixture (L) which was used for preparing the polymer solution dissolves in the precipitating medium (F).

9. Use of the porous membranes (M) according to Claim 1 to 4 and of the porous membranes (M) prepared according to Claim 5 to 8 for separating mixtures.

## Revendications

1. Membranes poreuses (M) contenant des copolymères d'organopolysiloxane/polyurée/polyuréthane/polyamide/polyoxalyldiamine de formule générale (1): 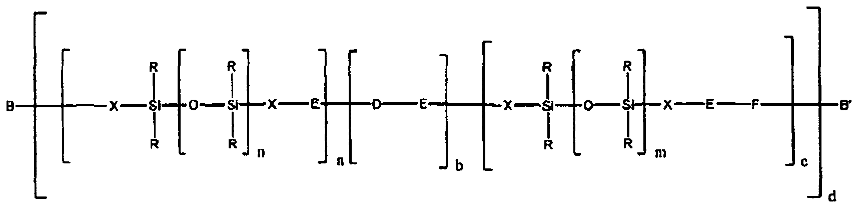 l'élément de structure E étant choisi parmi les formules générales (2a-f) 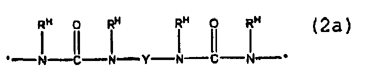 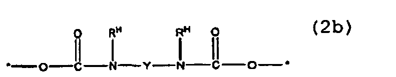 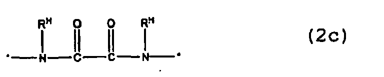 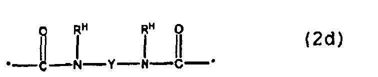 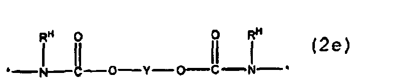 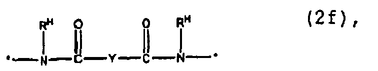 l'élément de structure **F** étant choisi parmi les formules générales (3a-f) 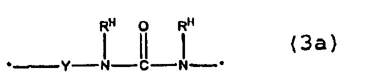 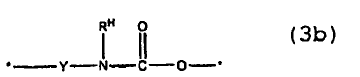 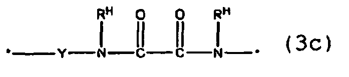 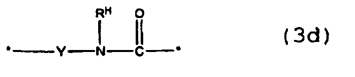 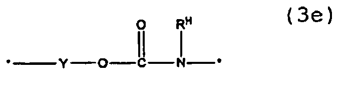 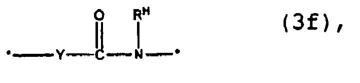 où
**R** signifie un radical hydrocarboné monovalent comprenant 1 à 20 atomes de carbone, éventuellement substitué par fluor ou chlore,
**R^{H}** signifie hydrogène, un radical hydrocarboné monovalent comprenant 1 à 22 atomes de carbone, éventuellement substitué par fluor ou chlore,
**X** signifie un radical alkylène comprenant 1 à 20 atomes de carbone, dans lequel des unités méthylène non adjacentes peuvent être remplacées par des groupes -O-, ou un radical arylène comprenant 6 à 22 atomes de carbone,
**Y** signifie un radical hydrocarboné divalent comprenant 1 à 20 atomes de carbone, éventuellement substitué par fluor ou chlore,
**D** signifie un radical alkylène comprenant 1 à 700 atomes de carbone, éventuellement substitué par fluor, chlore, alkyle en C₁-C₆ ou ester d'alkyle en C₁-C₆, dans lequel des unités méthylène non adjacentes peuvent être remplacées par des groupes -O-, -COO-, -OCO-, ou -OCOO-, ou un radical arylène comprenant 6 à 22 atomes de carbone,
**B, B'** signifient un groupe terminal réactif ou non réactif qui est lié par covalence au polymère,
**m** signifie un nombre entier de 1 à 4000,
**n** signifie un nombre entier de 1 à 4000,
**a** signifie un nombre entier d'au moins 1,
**b** signifie un nombre entier de 0 à 40,
**c** signifie un nombre entier de 0 à 30 et
**d** signifie un nombre entier supérieur à 0, à condition qu'au moins 10% des radicaux **R^{H}** signifient hydrogène.
à condition qu'au moins 10% des radicaux **R^{H}** signifient hydrogène.

2. Membranes poreuses (M) selon la revendication 1, **R** signifiant un radical hydrocarboné monovalent comprenant 1 à 6 atomes de carbone, non substitué.

3. Membranes poreuses (M) selon la revendication 1 ou 2, **a** signifiant un nombre d'au plus 50.

4. Membranes poreuses (M) selon les revendications 1 à 3, n signifiant un nombre de 15 à 400.

5. Procédé pour la fabrication de membranes poreuses (M) selon les revendications 1 à 4, en copolymères d'organopolysiloxane/polyurée/polyuréthane/polyamide/polyoxalyldiamine de la formule générale (1) ci-dessus, selon le procédé par inversion de phases, dans lequel on produit un film à partir d'une solution de copolymères d'organopolysiloxane/polyurée/polyuréthane/polyamide/polyoxalyldiamine dans un solvant (L) et le film contenant le solvant (L) est mis en contact avec un agent de précipitation (F).

6. Procédé selon la revendication 5, dans lequel le solvant (L) et l'agent de précipitation (F) sont éliminés par évaporation du film contenant le solvant (L).

7. Procédé selon la revendication 5 ou 6, dans lequel le film polymère contenant encore du solvant (L) est immergé dans un bain de précipitation rempli d'agent de précipitation (F).

8. Procédé selon les revendications 5 à 7, dans lequel le solvant (L) ou le mélange de solvants (L), qui a été utilisé pour la préparation de la solution polymère, se dissout dans l'agent de précipitation (F).

9. Utilisation des membranes poreuses (M) selon les revendications 1 à 4 et des membranes poreuses (M) fabriquées selon les revendications 5 à 8 pour la séparation de mélanges de substances.
